(19) Europäisches Patentamt / European Patent Office / Office européen des brevets

(11) **EP 4 694 393 A1**

(12) **EUROPEAN PATENT APPLICATION**
published in accordance with Art. 153(4) EPC

(43) Date of publication:
**11.02.2026 Bulletin 2026/07**

(21) Application number: **23929542.1**

(22) Date of filing: **31.03.2023**

(51) International Patent Classification (IPC):
***H04W 52/34*** (2009.01)

(52) Cooperative Patent Classification (CPC):
**H04L 1/1809; H04L 5/00; H04W 24/08;**
**H04W 52/34; H04W 72/044; H04W 74/08**

(86) International application number:
**PCT/CN2023/085810**

(87) International publication number:
**WO 2024/197959 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **LUO, Xingyi
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **POWER CONTROL METHOD AND APPARATUS, COMMUNICATION DEVICE, AND STORAGE MEDIUM**

(57)     The present disclosure relates to a power control communication method and apparatus, a device, a system, and a storage medium. The method comprises: receiving first information transmitted by a network device, wherein the first information is used for triggering a terminal to transmit a random access channel (RACH) to a candidate cell of the network device, and the first information is used by the terminal to determine the transmission power of the RACH; on basis on the first information, determining the transmission power of the RACH; and on basis of the transmission power of the RACH, transmitting the RACH to the candidate cell of the network device, wherein the RACH is used for determining timing advance (TA) from the terminal to the candidate cell. By using the first information to determine the transmission power of the RACH transmitted by the terminal to the network device, the transmission power of the RACH may be determined more accurately, thereby improving the accuracy of TA measurement.

FIG. 2

**Description**

**FIELD**

The present disclosure relates to the field of communication technology, and in particular to a power control method and apparatus, communication device, and a storage medium.

**BACKGROUND**

When a terminal switches from a source cell of a network device to a candidate cell, for example, in a layer1/layer2(L1/L2)-based inter-cell mobility (LTM) scenario, it is necessary to measure a timing advance (TA) of each candidate cell in advance in order to complete the handover as quickly as possible.

**SUMMARY**

Embodiments of the present disclosure provide a power control method and apparatus, a communication device, and a storage medium.

According to a first aspect of embodiments of the present disclosure, there is provided a power control method performed by a terminal. The method includes: receiving first information transmitted by a network device, in which the first information is used to trigger the terminal to transmit a random access channel (RACH) to a candidate cell of the network device, and the first information is used for the terminal to determine a transmit power of the RACH; determining the transmit power of the RACH based on the first information; and transmitting the RACH to the candidate cell of the network device based on the transmit power of the RACH, in which the RACH is used to determine a timing advance (TA) of the terminal to the candidate cell.

According to a second aspect of embodiments of the present disclosure, there is provided a power control method performed by a network device. The method includes: transmitting first information, in which the first information used to trigger a terminal to transmit a random access channel (RACH) to a candidate cell of the network device, and the first information is used for the terminal to determine a transmit power of a RACH; and receiving, by the candidate cell of the network device, the RACH transmitted by the terminal based on the transmit power of the RACH, in which the RACH is used to determine a timing advance (TA) of the terminal to the candidate cell.

According to a third aspect of embodiments of the present disclosure, there is provided a power control method performed by a communication system. The method includes: transmitting, by a network device, first information, in which the first information is used to trigger a terminal to transmit a random access channel (RACH) to a candidate cell of the network device, and the first information is used for the terminal to determine a transmit power of the RACH; receiving, by the terminal, the first information transmitted by the network device; determining, by the terminal, the transmit power of the RACH based on the first information; transmitting, by the terminal, the RACH to the candidate cell of the network device based on the transmit power of the RACH, in which the RACH is used to determine a timing advance (TA) of the terminal to the candidate cell; and receiving, by the candidate cell of the network device, the RACH transmitted by the terminal based on the transmit power of the RACH.

According to a fourth aspect of embodiments of the present disclosure, there is provided a first power control apparatus. Apparatus includes: a receiving module configured to receive first information transmitted by a network device, in which the first information is configured to trigger a terminal to transmit a random access channel (RACH) to a candidate cell of the network device, and the first information is used for the terminal to determine a transmit power of the RACH; a processing module configured to determine the transmit power of the RACH based on the first information; and a transmitting module configured to transmit the RACH to the candidate cell of the network device based on the transmit power of the RACH, and the RACH is used to determine a timing advance (TA) of the terminal to the candidate cell.

According to a fifth aspect of embodiments of the present disclosure, there is provided a second power control apparatus. Apparatus includes: a transmitting module configured to transmit first information, in which the first information is used to trigger a terminal to transmit a random access channel (RACH) to a candidate cell of a network device, and the first information is used for the terminal to determine a transmit power of the RACH; and a receiving module configured to receive, by the candidate cell of the network device, the RACH transmitted by the terminal based on the transmit power of the RACH, in which the RACH is used to determine a timing advance (TA) of the terminal to the candidate cell.

According to a sixth aspect of embodiments of the present disclosure, there is provided a communication device. The communication device includes one or more processors, in which the processor is configured to invoke instructions to cause the communication device to perform the power control method of any one of the first aspect and the second aspect.

According to a seventh aspect of embodiments of the present disclosure, there is provided a communication system. The communication system includes a terminal configured to implement the power control method according to any one of the first aspect and a network device configured to implement the power control method according to any one of the second aspect.

According to an eighth aspect of embodiments of the present disclosure, there is provided a storage medium storing instructions that, when the instructions are executed on a communication device, cause the communication device to perform the power control method according to any one of the first aspect and the second aspect.

## BRIEF DESCRIPTION OF THE DRAWINGS

In order to more clearly explain the technical solutions in embodiments of the present disclosure, accompanying drawings necessary for the description of the embodiments will be described below, and the following drawings are only some embodiments of the present disclosure, and do not specifically limit the scope of protection of the present disclosure.

FIG. 1 is a schematic diagram of an architecture of a communication system according to an embodiment of the present disclosure.

FIG. 2 is an interactive schematic diagram of a power control method according to an embodiment of the present disclosure.

FIG. 3a is a flowchart of a power control method according to an embodiment of the present disclosure.

FIG. 3b is a flowchart of a power control method according to an embodiment of the present disclosure.

FIG. 4a is a flowchart of a power control method according to an embodiment of the present disclosure.

FIG. 4b is a flowchart of a power control method according to an embodiment of the present disclosure.

FIG. 5 is a flowchart of a power control method according to an embodiment of the present disclosure.

FIG. 6 is a schematic diagram of a power control method according to an embodiment of the present disclosure.

FIG. 7a is a schematic diagram of a power control apparatus according to an embodiment of the present disclosure.

FIG. 7b is a schematic diagram of a power control apparatus according to an embodiment of the present disclosure.

FIG. 8 is a schematic diagram of a communication device according to an illustrative embodiment.

FIG. 9 is a schematic diagram of a chip structure according to an illustrative embodiment.

## DETAILED DESCRIPTION OF THE DISCLOSURE

Illustrative embodiments will be illustrated in detail herein, and the examples thereof are illustrated in accompanying drawings. When the following description refers to accompanying drawings, unless otherwise specified, the same or similar elements are denoted by the same numerals in the different accompanying drawings. Implementations described in the illustrative embodiments do not represent all implementations consistent with the present disclosure.

A terminal determines a TA to each candidate cell based on a random access channel (RACH), but how the terminal transmits the RACH to the candidate cell with an appropriate transmit power is a problem to be solved.

Embodiments of the present disclosure provide a power control method and apparatus, a communication device, and a storage medium.

According to a first aspect, embodiments of the present disclosure provide a power control method performed by a terminal. The method includes: receiving first information transmitted by a network device, in which the first information is used to trigger the terminal to transmit a random access channel (RACH) to a candidate cell of the network device, and the first information is used for the terminal to determine a transmit power of the RACH; determining the transmit power of the RACH based on the first information; and transmitting the RACH to the candidate cell of the network device based on the transmit power of the RACH, in which the RACH is used to determine a TA of the terminal to the candidate cell.

In above embodiments, the transmit power of the RACH is determined through the first information to ensure that the terminal may transmit the RACH with an appropriate transmit power, and to improve accuracy of TA measurement of the candidate cell.

In connection with some embodiments of the first aspect, in some embodiments, the first information indicates a first value of the RACH, and the first value indicates a transmit power adjustment amount of the RACH.

In above embodiments, the transmit power adjustment amount of the RACH is determined through the first information to ensure that the terminal may transmit the RACH with an appropriate transmit power, and to improve accuracy of TA measurement of the candidate cell.

In connection with some embodiments of the first aspect, in some embodiments, the first information includes a first field, and different values of the first field correspond to different first values.

In above embodiments, different first values are determined by different values of the first field, and different first values may be determined based on actual conditions, improving accuracy of the terminal determining the transmit power of the RACH.

In connection with some embodiments of the first aspect, in some embodiments, determining the transmit power of the RACH based on the first information includes determining the transmit power of the RACH based on the first value.

In above embodiments, the transmit power of the RACH is determined by the first value, the transmit power of the terminal transmitting the RACH may be more accurately determined, and accuracy of TA measurement of the candidate cell may be improved.

In connection with some embodiments of the first aspect, in some embodiments, determining the transmit power of the RACH based on the first value satisfies the following relationship:

$$P_{RACH} = \min \left\{ P_{CMAX}, P_{traget} + PL + \delta \right\}$$

where $P_{RACH}$ represents the transmit power of the RACH, $P_{CMAX}$ represents a maximum transmit power, $P_{traget}$ represents a target receive power of the RACH, $PL$ represents a path loss determined based on a downlink reference signal, and $\delta$ represents the first value.

In above embodiments, the transmit power of the terminal transmitting the RACH may be more accurately determined by above formula, and accuracy of TA measurement of the candidate cell may be improved.

In connection with some embodiments of the first aspect, in some embodiments, determining the transmit power of the RACH based on the first information includes determining the transmit power based on a second value, in which the second value is determined based on the first value received within a first time period.

In above embodiments, the second value may be determined based on the first value received within the first time period, and the transmit power may be determined based on the second value, more accurately determining the transmit power of the terminal transmitting the RACH, ensuring that the terminal may transmit the RACH with an appropriate transmit power, and improving accuracy of TA measurement of the candidate cell.

In connection with some embodiments of the first aspect, in some embodiments, determining the transmit power based on the second value satisfies the following relationship:

$$P_{RACH} = \min \left\{ P_{CMAX}, P_{traget} + PL + \Delta \right\}$$

where $P_{RACH}$ represents the transmit power of the RACH, $P_{CMAX}$ represents a maximum transmit power, $P_{traget}$ represents a target receive power of the RACH, $PL$ represents a path loss determined based on a downlink reference signal, and $\Delta$ represents the second value.

In above embodiments, the transmit power is determined based on the second value, more accurately determining the transmit power of the terminal transmitting the RACH, ensuring that the terminal may transmit the RACH with an appropriate transmit power, and improving accuracy of TA measurement of the candidate cell.

In connection with some embodiments of the first aspect, in some embodiments, the first information indicates whether the RACH currently transmitted by the terminal to the candidate cell is a retransmitted RACH.

In above embodiments, based on the first information, it is possible to determine whether the RACH currently transmitted by the terminal to the candidate cell is the retransmitted RACH, and whether it is necessary to increase the transmit power of the current RACH, ensuring that the terminal may transmit the RACH with an appropriate transmit power, and improving accuracy of TA measurement of the candidate cell.

In connection with some embodiments of the first aspect, in some embodiments, in a case where the first information indicates that the RACH currently transmitted by the terminal to the candidate cell is a retransmitted RACH, a retransmission count of the RACH is determined.

In above embodiments, the retransmission count of the RACH is determined based on the first information, and the transmit power of the terminal transmitting the RACH is increased based on the retransmission count, ensuring that the terminal may transmit the RACH with an appropriate transmit power, and improving accuracy of TA measurement of the candidate cell.

In connection with some embodiments of the first aspect, in some embodiments, determining the retransmission count of the RACH includes: introducing a counter corresponding to the candidate cell at the terminal side, incrementing the counter by one in a case where the first information indicates that the RACH initiated to the candidate cell triggered this time is a one time retransmission, and determining the retransmission count of the currently triggered RACH transmitted to the candidate cell based on the value corresponding to the counter of the candidate cell; in which different candidate cells correspond to different counters.

In above embodiments, the counter of the candidate cell is used to determine which retransmission the RACH initiated to the candidate cell currently triggered by the first information is, and then the transmit power of the terminal transmitting the RACH is determined based on the retransmission count, ensuring that the terminal may transmit the RACH with an appropriate transmit power, and improving accuracy of TA measurement of the candidate cell.

In connection with some embodiments of the first aspect, in some embodiments, in a case where the first information indicates that the RACH currently transmitted by the terminal to the candidate cell is not a retransmitted RACH, or the first information indicates that a beam of the RACH transmitted by the terminal to the candidate cell changes (or an SSB index of the RACH transmitted by the terminal to the candidate changes), the counter of the candidate cell is reset to 1.

In above embodiments, it is determined by the first information that the RACH initiated to the candidate cell triggered this time is not a retransmitted RACH, the beam of the RACH transmitted by the terminal to the candidate cell changes, or the SSB index of the RACH transmitted by the terminal to the candidate cell changes, and the counter of the candidate cell is reset to 1, to avoid inaccuracy of the retransmission count determined by the terminal based on the counter in the next retransmission of the RACH.

In connection with some embodiments of the first aspect, in some embodiments, determining the transmit power of the RACH based on the first information includes determining the transmit power of the RACH based on the retransmission count of the RACH and a power ramping value.

In above embodiments, based on the retransmission count of the RACH and the power ramping value, the transmit power of the terminal transmitting the RACH is more accurately determined to ensure that the terminal may transmit the RACH with an appropriate transmit power, and accuracy of TA measurement of the candidate cell is improved.

In connection with some embodiments of the first aspect, in some embodiments, determining the transmit power of the RACH based on the retransmission count of the RACH and the power ramping value satisfies the following relationship:

$$P_{RACH} = \min\left\{P_{CMAX}, P_{traget} + PL\right\}$$

where $P_{RACH}$ represents the transmit power of the RACH, $P_{CMAX}$ represents a maximum transmit power, $P_{traget}$ = *preambleReceivedTargetPower + DELTA_PREAMBLE + (COUNTER - 1) × STEP, preambleReceivedTargetPower* represents an initial random access preamble power configured by the network device 102, *DELTA_PREAMBLE* represents a power offset value determined based on a preamble format, *COUNTER* represents the retransmission count of the RACH, *STEP* represents the power ramping value, and *PL* represents a path loss determined based on a downlink reference signal. In above embodiments, the transmit power of the terminal transmitting the RACH is determined based on above formula, ensuring that the terminal may transmit the RACH with an appropriate transmit power, and improving accuracy of TA measurement of the candidate cell.

In connection with some embodiments of the first aspect, in some embodiments, the first information indicates a first value of the RACH, and the first information indicates whether the RACH transmitted by the terminal to the candidate cell triggered this time is a retransmitted RACH.

In above embodiments, the first information indicates the first value of the RACH, and simultaneously the first information further indicates whether the RACH transmitted by the terminal to the candidate cell is a retransmitted RACH, and further determines the transmit power of the terminal transmitting the RACH based on the first value and whether the RACH is the retransmission, ensuring that the terminal may transmit the RACH with an appropriate transmit power, and improving accuracy of TA measurement of the candidate cell.

In connection with some embodiments of the first aspect, in some embodiments, determining the transmit power of the RACH based on the first information includes determining the transmit power of the RACH based on the first value, the retransmission count of the RACH, and the power ramping value.

In above embodiments, based on the first value, the retransmission count of the RACH, and the power ramping value, the transmit power of the terminal transmitting the RACH may be more accurately determined to ensure that the terminal may transmit the RACH with an appropriate transmit power, and improve accuracy of TA measurement of the candidate cell.

In connection with some embodiments of the first aspect, in some embodiments, determining the transmit power of the RACH based on the first value, the retransmission count of the RACH, and the power ramping value satisfies the following relationship:

$$P_{RACH} = \min\left\{P_{CMAX}, P_{traget} + PL + \delta\right\}$$

where $P_{RACH}$ represents the transmit power of the RACH, $P_{CMAX}$ represents a maximum transmit power, $P_{traget}$ = *preambleReceivedTargetPower + DELTA_PREAMBLE + (COUNTER - 1) × STEP, preambleReceivedTargetPower* represents an initial random access preamble power configured by the network device 102, *DELTA_PREAMBLE* represents a power offset value determined based on a preamble format, *COUNTER* represents the retransmission count of the RACH, *STEP* represents the power ramping value, *PL* represents a path loss determined based on a downlink reference signal, and $\delta$ represents the first value.

In above embodiments, the transmit power of the terminal transmitting the RACH may be more accurately determined based on above formula, ensuring that the terminal may transmit the RACH with an appropriate transmit power, and improving accuracy of TA measurement of the candidate cell.

In connection with some embodiments of the first aspect, in some embodiments, determining the transmit power of the RACH based on the first information includes determining the transmit power of the RACH based on a second value, a retransmission count of the RACH, and a power ramping value, in which the second value is determined based on the first value received within the first time period.

In above embodiments, based on the second value, the retransmission count of the RACH and the power ramping value, the transmit power of the terminal transmitting the RACH is more accurately determined to ensure that the terminal may transmit the RACH with an appropriate transmit power, and accuracy of TA measurement of the candidate cell is improved.

In connection with some embodiments of the first aspect, in some embodiments, determining the transmit power of the RACH based on the second value, the retransmission count of the RACH, and the power ramping value satisfies the following relationship:

$$P_{RACH} = \min \left\{ P_{CMAX}, P_{traget} + PL + \Delta \right\}.$$

where $P_{RACH}$ represents the transmit power of the RACH, $P_{CMAX}$ represents a maximum transmit power, $P_{traget} = preambleReceivedTargetPower + DELTA\_PREAMBLE + (COUNTER - 1) \times STEP$, $preambleReceivedTargetPower$ represents an initial random access preamble power configured by the network device 102, $DELTA\_PREAMBLE$ represents a power offset value determined based on a preamble format, $DELTA\_PREAMBLE$ represents the retransmission count of the RACH, $STEP$ represents the power ramping value, $PL$ represents a path loss determined based on a downlink reference signal, and $\Delta$ represents the second value.

In above embodiments, the transmit power of the terminal transmitting the RACH may be more accurately determined based on above formula, ensuring that the terminal may transmit the RACH with an appropriate transmit power, and improving accuracy of TA measurement of the candidate cell.

In connection with some embodiments of the first aspect, in some embodiments, the second value satisfies the following relationship:

$$\Delta = \Delta \left( i - k \right) + \Sigma_{i-k+1}^{i} \delta_{m}$$

where $\Delta$ represents the second value, i represents a current time, k represents any time before the current time, and $\delta_m$ represents the first value received for m-th time.

In above embodiments, the second value is determined based on the first value within a time period, and the transmit power of the terminal transmitting the RACH is determined based on the second value, ensuring that the terminal may transmit the RACH with an appropriate transmit power, and improving accuracy of TA measurement of the candidate cell.

In connection with some embodiments of the first aspect, in some embodiments, in a case where the first information indicates that a beam or an SSB index of the RACH transmitted by the terminal changes, the second value is determined to be a preset value.

In above embodiments, the first information indicates that a beam or an SSB index of the RACH transmitted by the terminal changes, and the second value is determined to be a preset value, avoiding the influence of the second value on the transmit power of the RACH, ensuring that the terminal may transmit the RACH with an appropriate transmit power, and improving accuracy of TA measurement of the candidate cell.

According to a second aspect, embodiments of the present disclosure provide a power control method performed by a network device. The method includes: transmitting first information, in which the first information is used to trigger a terminal to transmit a random access channel (RACH) to a candidate cell, and the first information is used for the terminal to determine a transmit power of the RACH; and receiving, by the candidate cell of the network device, the RACH transmitted by the terminal based on the transmit power of the RACH, in which the RACH is used to determine a TA of the terminal to the candidate cell.

In connection with some embodiments of the second aspect, in some embodiments, the first information indicates a first value of the RACH, and the first value indicates a transmit power adjustment amount of the RACH.

In connection with some embodiments of the second aspect, in some embodiments, the first information includes a first field, and different values of the first field correspond to different first values.

In connection with some embodiments of the second aspect, in some embodiments, the first information is used for the terminal to determine the transmit power of the RACH based on the first value.

In connection with some embodiments of the second aspect, in some embodiments, the first information is used for the terminal to determine the transmit power of the RACH based on:

$$P_{RACH} = \min\left\{P_{CMAX}, P_{traget} + PL + \delta\right\}$$

where $P_{RACH}$ represents the transmit power of the RACH, $P_{CMAX}$ represents a maximum transmit power, $P_{traget}$ represents a target receive power of the RACH, $PL$ represents a path loss determined based on a downlink reference signal, and $\delta$ represents the first value.

In connection with some embodiments of the second aspect, in some embodiments, the first information is used for the terminal to determine the transmit power of the RACH based on a second value, and the second value is determined based on the first value received within the first time period.

In connection with some embodiments of the second aspect, in some embodiments, the first information is used for the terminal to determine the transmit power of the RACH based on:

$$P_{RACH} = \min\left\{P_{CMAX}, P_{target} + PL + \Delta\right\}$$

where $P_{RACH}$ represents the transmit power of the RACH, $P_{CMAX}$ represents a maximum transmit power, $P_{traget}$ represents a target receive power of the RACH, $PL$ represents a path loss determined based on a downlink reference signal, and $\Delta$ represents the second value.

In connection with some embodiments of the second aspect, in some embodiments, the first information indicates whether the RACH currently transmitted by the terminal to the candidate cell is a retransmitted RACH.

In above embodiments, the first information is used to indicate whether the RACH transmitted by the terminal to the candidate cell is the retransmitted RACH, so that the terminal determines whether or not to perform ramping, improving accuracy of the network device receiving the RACH transmitted by the terminal and improving accuracy of the TA measurement of the candidate cell.

In connection with some embodiments of the second aspect, in some embodiments, in a case where the RACH previously transmitted by the terminal for measuring TA is not received, the first information indicates that the RACH currently transmitted by the terminal to the candidate cell is a one time retransmission.

In above embodiments, the network device determines that the RACH previously transmitted by the terminal for measuring TA is not received, and the first information is used to indicate that the RACH transmitted by the terminal to the candidate cell is a retransmitted RACH, so that the terminal determines to perform power ramping, improving accuracy of the network device receiving the RACH transmitted by the terminal and improving accuracy of TA measurement of the candidate cell.

In connection with some embodiments of the second aspect, in some embodiments, in a case where the RACH previously transmitted by the terminal for measuring TA is successfully received, the first information indicates that the RACH currently transmitted by the terminal to the candidate cell is not a retransmission.

In above embodiments, the network device determines that the RACH previously transmitted by the terminal for measuring TA is successfully received, and the first information is used to indicate that the RACH transmitted by the terminal to the candidate cell is not a retransmitted RACH, so that the terminal determines that the power ramping may not be performed.

In connection with some embodiments of the second aspect, in some embodiments, the first information is used to indicate that the RACH currently transmitted by the terminal to the candidate cell is a retransmitted RACH, and the first information is used for the terminal to determine the retransmission count of the RACH.

In connection with some embodiments of the second aspect, in some embodiments, the first information is used to indicate that the RACH currently transmitted by the terminal to the candidate cell is not a retransmitted RACH or a beam of the RACH transmitted by the terminal to the candidate cell changes or an SSB index of the RACH transmitted by the terminal to the candidate cell changes, and the first information is used for the terminal to determine to reset the counter of the candidate cell to 1.

In connection with some embodiments of the second aspect, in some embodiments, the first information is used to instruct the terminal to determine the transmit power of the RACH based on the retransmission count of the RACH and the power ramping value.

In connection with some embodiments of the second aspect, in some embodiments, the first information is used to instruct the terminal to determine the transmit power of the RACH based on:

$$P_{RACH} = \min\left\{P_{CMAX}, P_{traget} + PL\right\}$$

where $P_{RACH}$ represents the transmit power of the RACH, $P_{CMAX}$ represents a maximum transmit power, $P_{traget}$ = *preambleReceivedTargetPower + DELTA_PREAMBLE + (COUNTER - 1) × STEP*, *preambleReceivedTargetPower* represents an initial random access preamble power configured by the network device 102, *DELTA_PREAMBLE* represents a power offset value determined based on a preamble format, *COUNTER* represents the retransmission count of the RACH, *STEP* represents the power ramping value, and *PL* represents a path loss determined based on a downlink reference signal.

In connection with some embodiments of the second aspect, in some embodiments, the first information indicates a first value of the RACH, and the first information indicates whether the RACH transmitted by the terminal to the candidate cell is a retransmitted RACH.

In connection with some embodiments of the second aspect, in some embodiments, the first information is used to instruct the terminal to determine the transmit power of the RACH based on the first value, the retransmission count of the RACH, and the power ramping value.

In connection with some embodiments of the second aspect, in some embodiments, the first information is used to instruct the terminal to determine the transmit power of the RACH based on:

$$P_{RACH} = \min\left\{P_{CMAX}, P_{traget} + PL + \delta\right\}$$

where $P_{RACH}$ represents the transmit power of the RACH, $P_{CMAX}$ represents a maximum transmit power, $P_{traget}$ = *preambleReceivedTargetPower + DELTA_PREAMBLE + (COUNTER - 1) × STEP, preambleReceivedTargetPower* represents an initial random access preamble power configured by the network device 102, *DELTA_PREAMBLE* represents a power offset value determined based on a preamble format, *COUNTER* represents the retransmission count of the RACH, *STEP* represents the power ramping value, *PL* represents a path loss determined based on a downlink reference signal, and $\delta$ represents the first value.

In connection with some embodiments of the second aspect, in some embodiments, the first information is used to instruct the terminal to determine the transmit power of the RACH based on the second value, the retransmission count of the RACH, and the power ramping value, and the second value is determined based on the first value received within the first time period.

In connection with some embodiments of the second aspect, in some embodiments, the first information is used to instruct the terminal to determine the transmit power of the RACH based on:

$$P_{RACH} = \min\left\{P_{CMAX}, P_{traget} + PL + \Delta\right\}$$

where $P_{RACH}$ represents the transmit power of the RACH, $P_{CMAX}$ represents a maximum transmit power, $P_{traget}$ = *preambleReceivedTargetPower + DELTA_PREAMBLE + (COUNTER - 1) × STEP, preambleReceivedTargetPower* represents an initial random access preamble power configured by the network device 102, *DELTA_PREAMBLE* represents a power offset value determined based on a preamble format, *DELTA_PREAMBLE* represents the retransmission count of the RACH, *STEP* represents the power ramping value, *PL* represents a path loss determined based on a downlink reference signal, and $\Delta$ represents the second value.

In connection with some embodiments of the second aspect, in some embodiments, the second value satisfies the following relationship:

$$\Delta = \Delta\left(i - k\right) + \Sigma_{i-k+1}^{i}\,\delta_{m}$$

where $\Delta$ represents the second value, i represents a current time, k represents any time before the current time, and $\delta_{m}$ represents the first value received for m-th time.

In connection with some embodiments of the second aspect, in some embodiments, in a case where the first information indicates that a beam or an SSB index of the RACH transmitted by the terminal changes, the first information is used for the terminal to determine the second value to be a preset value.

According to a third aspect, embodiments of the present disclosure provide a power control method performed by a communication system. The method includes: transmitting, by a network device, first information, in which the first information is used to trigger a terminal to transmit a random access channel (RACH) to a candidate cell, and the first indication information is used for the terminal to determine a transmit power of the RACH; receiving, by the terminal, the first information transmitted by the network device; determining, by the terminal, the transmit power of the RACH based on the first information; transmitting, by the terminal, the RACH to the candidate cell of the network device based on the transmit power of the RACH, in which the RACH is used to determine the timing advance (TA) of the terminal to the candidate cell; and receiving, by the candidate cell of the network device, the RACH transmitted by the terminal based on the transmit power of the RACH.

In above embodiments, the transmit power of the terminal transmitting RACH is determined through the first information to ensure that the terminal may transmit the RACH with an appropriate transmit power, and to improve accuracy of TA measurement of the candidate cell.

According to a fourth aspect, embodiments of the present disclosure provide a first power control apparatus. The apparatus includes: a receiving module configured to receive first information transmitted by a network device, in which the first information is used to trigger a terminal to transmit a random access channel (RACH) to a candidate cell of the network device, and the first information is used for the terminal to determine a transmit power of the RACH; a processing module configured to determine the transmit power of the RACH based on the first information; a transmitting module configured to transmit the RACH to the candidate cell of the network device based on the transmit power of the RACH, in which the RACH is used to determine a TA of the terminal to the candidate cell.

According to a fifth aspect, embodiments of the present disclosure provide a second power control apparatus. The apparatus includes: a transmitting module configured to transmit first information, in which the first information is used to trigger a terminal to transmit a random access channel (RACH) to a candidate cell of the network device, and the first information is used for the terminal to determine a transmit power of the RACH; and a receiving module configured to receive, by the candidate cell of the network device, the RACH transmitted by the terminal based on the transmit power of the RACH, and the RACH is used to determine a TA of the terminal to the candidate cell.

According to a sixth aspect, embodiments of the present disclosure provide a communication device. The communication device includes: one or more processors, in which the processor is to invoke instructions to cause the communication device to perform the power control method of any one of the first aspect and the second aspect.

According to a seventh aspect, embodiments of the present disclosure provide a communication system including a terminal configured to implement any one of the power control methods of the first aspect and a network device configured to implement any one of the power control methods of the second aspect.

According to an eighth aspect, embodiments of the present disclosure provide a storage medium storing instructions that, when the instructions are executed on a communication device, cause the communication device to perform the power control method of any one of the first aspect and the second aspect.

According to a ninth aspect, embodiments of the present disclosure provide a program product that, when executed by a communication device, causes the communication device to perform a method as described in optional implementations of the first aspect and the second aspect, the second aspect and the third aspect.

According to a tenth aspect, embodiments of the present disclosure provide a computer program that, when executed on a computer, causes the computer to perform a method as described in optional implementations of the first aspect and the third aspect, the second aspect and the third aspect.

It may be understood that the first communication apparatus, the second communication apparatus, the communication device, the communication system, the storage medium, the program product, and the computer program described above are all used to perform the method provided by embodiments of the present disclosure. Therefore, the beneficial effects that may be achieved can refer to the beneficial effects in the corresponding methods, which will not be repeated here.

Embodiments of the present disclosure propose "a power control method and apparatus, a device, a system, and a storage medium". In some embodiments, terms such as power control method, communication method, and information processing method may be interchangeable with each other, terms such as power control, communication device, and information processing device may be interchangeable with each other, and terms such as information processing system and communication system may be interchangeable with each other.

Embodiments of the present disclosure are not exhaustive, but are merely illustrative of some embodiments, and are not intended to be a specific limitation on the scope of protection of the present disclosure. In absence of contradictions, each step in a certain embodiment may be implemented as an independent embodiment, and the steps may be arbitrarily combined, for example, a solution in which some steps are removed in a certain embodiment can also be implemented as an independent embodiment, and the order of each step in a certain embodiment may be arbitrarily exchanged, and in addition, optional implementations in a certain embodiment may be arbitrarily combined. In addition, various embodiments may be arbitrarily combined, for example, some or all steps of different embodiments may be arbitrarily combined, and one embodiment may be arbitrarily combined with optional implementations of other embodiments.

In each embodiment of the present disclosure, if there is no special description and logical conflict, the terms and/or descriptions among the embodiments are consistent and may be referenced to each other, and technical features in different embodiments may be combined to form new embodiments according to their intrinsic logical relationships.

The term used in embodiments of the present disclosure is for the purpose of describing specific embodiments only, and is not intended to limit the present disclosure.

In embodiments of the present disclosure, unless otherwise specified, an element represented in the singular form, such as "a", "an", "the", "this" and the like, may represent "one and only one", or may represent "one or more", "at least one", and the like. For example, in a case where an article such as "a", "an", and "the" in English is used in translation, a noun after the article may be understood as a singular expression or a plural expression.

In embodiments of the present disclosure, "a plurality" refers to two or more.

In some embodiments, terms such as "at least one of", "one or more", "a plurality of", "multiple", and the like may be interchangeable with each other.

The description modes such as "at least one of A, B, C..." and "A and/or B and/or C..." in embodiments of the present disclosure include a case where any one of A, B, C... exists alone, and any combination of any plurality of A, B, C..., and each case may exist alone; for example, "at least one of A, B, and C" includes cases where A alone, B alone, C alone, A and B combination, A and C combination, B and C combination, A and B and C combination; for example, A and/or B includes cases where A alone, B alone, a combination of A and B.

In some embodiments, descriptions such as "A in one case, B in another case" and "in response to one case A, in response to another case B" may include the following technical solutions according to the case: performing A independently of B, i.e., in some embodiments, A; performing B independently of A, i.e., in some embodiments, B; selectively performing A and B, i.e., in some embodiments, selecting one from A and B to perform; performing both A and B, i.e., in some embodiments, A and B. It is similar to the above when there are more branches such as A, B, C, etc.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "ranks". For another example, the number of description objects is not limited by ordinal numbers, and may be one or more. Taking "first device" as an example, the number of "devices" may be one or more. In addition, objects modified by different prefixes may be the same or different, for example, if the description object is "device", the "first device" and the "second device" may be the same device or different devices, and the types thereof may be the same or different; for another example, when the description object is "information", the "first information" and the "second information" may be the same information or different information, and the contents thereof may be the same or different.

In some embodiments, "including A," "comprising A," "for indicating A," "carrying A," may be interpreted as directly carrying A, or may be interpreted as indirectly indicating A.

In some embodiments, terms such as "in response to," "in response to determining," "in a case where," "upon," "when," "if," "in case," and the like may be interchangeable with each other.

In some embodiments, terms such as "greater than," "greater than or equal to," "not less than," "more than," "more than or equal to," "not less than," "higher than or equal to," "not less than," "above," and the like may be interchangeable with each other, and terms such as "smaller than," "smaller than or equal to," "not greater than," "less than," "less than or equal to," "not more than," "lower than," "lower than or equal to," "not higher than," "below" may be interchangeable with each other.

In some embodiments, a device or the like may be interpreted as either physical or virtual, and the name thereof is not limited to the name described in the embodiments, and terms such as "apparatus", "equipment", "device", "circuit", "network element", "node", "function", "unit", "section", "system", "network", "chip", "chip system", "entity", and "body" may be interchangeable with each other.

In some embodiments, terms such as "access network device (AN device)", "radio access network device (RAN device)", "base station (BS)", "radio base station", "fixed station" "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", and "bandwidth part (BWP)" may be interchangeable with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote device, mobile device, wireless device, wireless communication device, remote device, mobile subscriber station, access terminal, mobile subscriber, handset, user agent, mobile client, client, etc. may be interchangeable with each other.

In some embodiments, an access network device, a core network device, or a network device may be interchangeable with a terminal. For example, each embodiment of the present disclosure may be applied to a configuration in which communication between an access network device, a core network device, or a network device and a terminal is interchangeable with communication between a plurality of terminals (for example, it may also be referred to as a device-to-device (D2D), a vehicle-to-everything (V2X), or the like). In this case, the terminal may have all or a part of the functions of the access network device. Further, languages such as "uplink" and "downlink" may be interchangeable with languages corresponding to inter-terminal communication (for example, "side"). For example, an uplink channel, a downlink channel, or the like may be interchangeable with a sidelink channel, and an uplink, a downlink, or the like may be interchangeable with a sidelink.

In some embodiments, the terminal may be interchangeable with an access network device, a core network device, or a network device. In this case, the access network device, the core network device, or the network device may have all or a part of the functions of the terminal.

In some embodiments, the name of information or the like is not limited to the name described in embodiments, and terms such as "information", "message", "signal", "signaling", "report", "configuration", "indication", "instruction", "command", "channel", "parameter", "domain", "field", "symbol", "codebook", "codeword", "bit", "data", "program", and "chip" may be interchangeable with each other.

In some embodiments, terms such as "up", "uplink", and "physical uplink" may be interchangeable with each other, terms such as "down", "downlink", and "physical downlink" may be interchangeable with each other, terms such as "side", "sidelink", "side communication", "sidelink communication", "direct", "direct link", "direct communication", and "direct link communication" may be interchangeable with each other.

In some embodiments, terms such as "downlink control information (DCI)", "downlink (DL) assignment", "DL DCI", "uplink (UL) grant", and "UL DCI" may be interchangeable with each other.

In some embodiments, terms such as "physical downlink shared channel (PDSCH)" and "DL data" may be interchangeable with each other, and terms such as "physical uplink shared channel (PUSCH)" and "UL data" may be interchangeable with each other.

In some embodiments, terms such as "radio", "wireless", "radio access network (RAN)", "access network (AN)", and "RAN-based" may be interchangeable with each other.

In some embodiments, terms such as "search space", "search space set", "search space configuration", "search space set configuration", "control resource set (CORESET)", and "CORESET configuration" may be interchangeable with each other.

In some embodiments, terms such as "synchronization signal (SS)", "synchronization signal block (SSB)", "reference signal (RS)", "pilot", and "pilot signal" may be interchangeable with each other.

In some embodiments, terms such as "moment", "time point", "time", and "time position" may be interchangeable with each other, and terms such as "duration", "time period", "time window", "window", and "time" may be interchangeable with each other.

In some embodiments, terms such as "component carrier (CC)", "cell", "frequency carrier", and "carrier frequency" may be interchangeable with each other.

In some embodiments, terms such as "resource block (RB)", "physical resource block (PRB)", "sub-carrier group (SCG)", "resource element group (REG)", "PRB pair", "RB pair", and "resource element (RE)" may be interchangeable with each other.

In some embodiments, terms such as wireless access scheme, waveform, and the like may be interchangeable with each other.

In some embodiments, "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "number of layers", "rank", "resource", "resource set", "resource group", "beam", "beam width", "beam angular degree", "antenna", "antenna element", "panel" and the like may be interchangeable with each other.

In some embodiments, terms such as "frame", "radio frame", "subframe", "slot", "sub-slot", "mini-slot", "symbol", "transmission time interval (TTI)" and the like may be interchangeable with each other.

In some embodiments, "obtaining", "acquiring", "getting", "receiving", "transmitting", "bidirectional transmission", "transmitting and/or receiving" may be interchangeable with each other, and may be interpreted as receiving from other subjects, obtaining from a protocol, obtaining by itself, autonomously implementing, and the like.

In some embodiments, terms such as "send", "emit", "report", "issue", "transmit", "bi-directional transmission", "transmit and/or receive" may be interchangeable with each other.

In some embodiments, "predetermined" and "preset" may be interpreted as being specified in advance in a protocol or the like, or may be interpreted as performing a preset operation by a device or the like.

In some embodiments, determining may be interpreted as assessing, deciding, judging, calculating, computing, processing, deriving, investigating, retrieving, looking up, search, inquiry, ascertaining, receiving, transmitting, inputting, outputting, accessing, resolving, selecting, choosing, establishing, comparing, assuming, expecting, considering, broadcasting, notifying, communicating, forwarding, configuring, reconfiguring, allocating, mapping, assigning, etc., which is not limited to this.

In some embodiments, the judging or determination may be made by a value (0 or 1) represented by 1 bit, a true or false value (boolean value) represented by true or false, or a numerical comparison (for example, a comparison with a predetermined value), which is not limited to this.

In some embodiments, a "network" may be interpreted as an apparatus (e.g., an access network device, a core network device, etc.) included in the network.

In some embodiments, "not expecting reception" may be interpreted as not receiving on time domain resources and/or frequency domain resources, or may be interpreted as not performing subsequent processing on data or the like after receiving the data or the like; and "not expecting transmission" may be interpreted as not transmitting, or as transmitting but not expecting the receiver to respond to the transmitted content.

In some embodiments, the acquisition of data, information, etc. may comply with laws and regulations of the country where it is located.

In some embodiments, data, information, etc. may be obtained after obtaining the user's consent.

Further, each element, each row, or each column in the table of embodiments of the present disclosure may be implemented as an independent embodiment, and any combination of any element, any row, or any column may also be implemented as an independent embodiment.

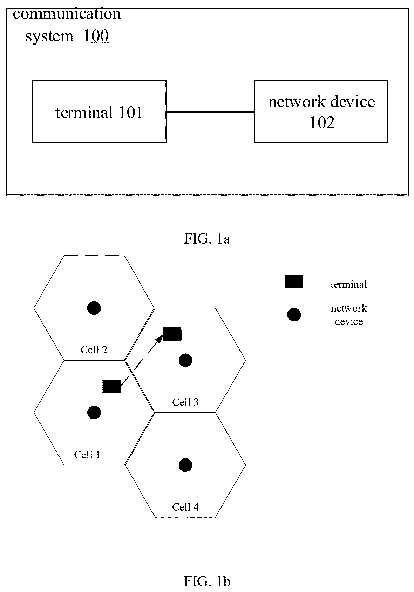

FIG. 1a is a schematic diagram of an architecture of a communication system according to an embodiment of the present disclosure.

As illustrated in FIG. 1b, the communication system 100 includes a terminal 101, a network device 102.

In some embodiments, the network device 102 may include at least one of an access network device and a core network device.

In some embodiments, the terminal 101 includes, for example, at least one of a mobile phone, a wearable device, an Internet of Things device, an automobile with a communication function, a smart car, a tablet computer, a computer with a wireless transmission and reception function, a virtual reality (VR) terminal device, an augmented reality (AR) terminal device, a wireless terminal device in an industrial control, a wireless terminal device in a self-driving, a wireless terminal device in a remote medical surgery, a wireless terminal device in a smart grid, a wireless terminal device in a transportation safety, a wireless terminal device in a smart city, and a wireless terminal device in a smart home, which is not limited to this.

In some embodiments, the access network device is, for example, a node or device that accesses a terminal to a wireless network, and the access network device may include an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center in a 5G communication system, a base station, an open base station (RAN), a cloud base station (Cloud RAN) in a 6G communication system, a base station in other communication systems, and an access node in a wireless fidelity (WiFi) system, which is not limited to this.

In some embodiments, the technical solution of the present disclosure may be applied to an Open RAN architecture, and at this time, interfaces between access network devices or within access network devices according to embodiments of the present disclosure may be changed to internal interfaces of the Open RAN, and flow and information interaction between these internal interfaces may be realized by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, which is not limited to this.

In some embodiments, the core network device may be one device, including one or more network elements, or may be a plurality of devices or a group of devices, including one or more network elements, or may be entity. The core network includes, for example, at least one of an evolved packet core (EPC), a 5G core network (5GCN), and a next generation core (NGC).

It may be understood that the communication system described in the embodiment of the present disclosure is to more clearly explain the technical solution of the embodiment of the present disclosure, and does not constitute a limitation on the technical solution provided by the embodiment of the present disclosure. As those skilled in the art know, with the evolution of the system architecture and the emergence of new business scenarios, the technical solution provided by the embodiment of the present disclosure is equally applicable to similar technical problems.

The following embodiments of the present disclosure may be applied to the communication system 100 illustrated in FIG. 1 or a part of the main body, which is not limited to this. Each body illustrated in FIG. 1 is an example, the communication system may include all or some of the bodies in FIG. 1, or other bodies other than FIG. 1, the number and form of the bodies are arbitrary, the connection relationship between the bodies is an example, the bodies may not be connected or connected, and the connection may be any form, including direct connection or indirect connection, wired connection or wireless connection.

Each embodiment of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), Global System for Mobile communications (GSM (registered trademark) ), CDMA2000, ultra mobile broadband (UMB), IEEE 802.11 (Wi-Fi (registered trademark), IEEE 802.16 (WiMAX (registered trademark)), IEEE 802.20, ultra-wideband (UWB), Bluetooth (registered trademark), public land mobile network (PLMN) network, device-to-device (D2D) system, machine-to-machine (M2M) system, internet of things (IoT) system, vehicle-to-everything (V2X) system, systems utilizing other power control methods, next generation systems extended based on them, etc. Further, a plurality of systems may be applied in combination (for example, LTE, a combination of LTE-A and 5G, or the like).

In embodiments of the present disclosure, the network device may maintain a plurality of candidate cells for the terminal, and when the terminal needs to switch the source cell as the terminal moves, the terminal can select one candidate cell from the plurality of candidate cells as the target cell and switch to the target cell.

FIG. 1b is a schematic diagram of L1/L2-based inter-cell mobility/LTM (inter-cell handover) according to an embodiment of the present disclosure.

As illustrated in FIG. 1b, the current source cell of the terminal 101 is cell 1, and the network device 102 may pre-configure a plurality of candidate cells (e.g., cell 2, cell 3, and cell 4) for the terminal 101. As the terminal 101 moves, when the network determines that handover is necessary based on the L1 measurement (beam measurement) result, one cell may be selected as the target cell from a plurality of candidate cells, for example, when the terminal 101 moves from cell 1 to cell 3, the terminal 101 may switch to cell 3.

Optionally, embodiments of the present disclosure also consider measuring the TA of the terminal 101 to each candidate cell in advance, to complete the handover more quickly when cell handover is performed.

In embodiments of the present disclosure, at least a measurement mode of triggering a Random Access Channel (RACH) based on a Physical downlink control channel (PDCCH) order is supported.

Optionally, in order to reduce the time overhead of TA measurement of candidate cells, it is not necessary to transmit a Random Access Response (RAR) in determining the RACH procedure in LTM. If the network device 102 does not receive the RACH correctly, the network device 102 is allowed to trigger the RACH again through the PDCCH order for TA measurement. However, since the first reception of the RACH is failed, in order to make this transmission as successful as possible, it is possible to consider increasing the transmit power of the RACH to the candidate cell. In some embodiments, the transmit power of the terminal 101 transmitting the RACH to the candidate cell satisfies the following relationship:

$$P_{PRACH,b,f,c}(i) = \min\left\{P_{CMAX,f,c}(i), P_{PRACH,target,f,c} + PL_{b,f,c}\right\}$$

where $P_{CMAX,f,c}$ represents a maximum transmit power of the terminal 101, $P_{PRACH,target,f,c}$ represents a target receive power of the PRACH, $PL_{b,f,c}$ represents a path loss determined based on a reference signal.

In embodiments of the present disclosure, if the terminal 101 does not receive the RAR, the terminal 101 considers that the RACH transmitted to the candidate cell is failed, and the terminal 101 retransmits the RACH and increases the transmit power.

Optionally, each time the terminal 101 retransmits the RACH to the candidate cell, the value of $P_{PRACH,target,f,c}$ is gradually increased.

In some embodiments, the value of $P_{PRACH,target,f,c}$ satisfies the following relationship:

$P_{traget}$ = preambleReceivedTargetPower + DELTA_PREAMBLE + (PREAMBLE_POWER_RAMPING_COUNTER - 1) $\times$ PREAMBLE_POWER_RAMPING_STEP + POWER_OFFSET_2STEP_RA

where, *preambleReceivedTargetPower* represents an initial random access preamble power, *DELTA_PREAMBLE* represents a power offset value determined based on a preamble format, *PREAMBLE_POWER_RAMPING_COUNTER* - 1 represents the retransmission count of the RACH, *PREAMBLE_POWER_RAMPING_STEP* represents a power increased each time, and *POWER_OFFSET_2STEP_RA* represents an additional value added when 2STEP.

Optionally, the value of *preambleReceivedTargetPower* is determined based on the configuration of the network device 102, for example, the network device 102 configures *preambleReceivedTargetPower* for the terminal 101 based on Radio Resource Control (RRC) signaling.

Optionally, the value of *DELTA_PREAMBLE* is determined based on different physical channel format lookup table. For example, Tables TS 38.321 7.3-1 and 7.3-2.

Optionally, the initial value of *preambleReceivedTargetPower* is 1, the value is incremented by one for each retransmission, and the maximum retransmission count is determined based on the configuration of the network device 102. For example, based on the parameter preambleTransMax.

Optionally, *PREAMBLE_POWER_RAMPING_STEP* is determined by the configuration of the network device 102. For example, the determination is based on the parameter powerRampingStep configured by the RRC.

Optionally, the measurement of the TA of the candidate cell is a continuous process, and in order to obtain the latest TA of the candidate cell, the network device needs to trigger the terminal to initiate a RACH every period of time. It is conceivable that the network device appropriately adjusts the power of the next RACH transmitted by the terminal according to the power of the RACH received each time.

In embodiments of the present disclosure, even in the RACH triggered by the PDCCH order, the terminal 101 cannot perform power adjustment according to the reception power of the previous RACH on the network device 102 side. In addition, if there is no RAR procedure for the RACH, the terminal 101 cannot determine whether the network device 102 successfully receives the RACH according to the RAR, and cannot determine whether it is necessary to perform RACH retransmission and power ramping to the candidate cell of the network device 102.

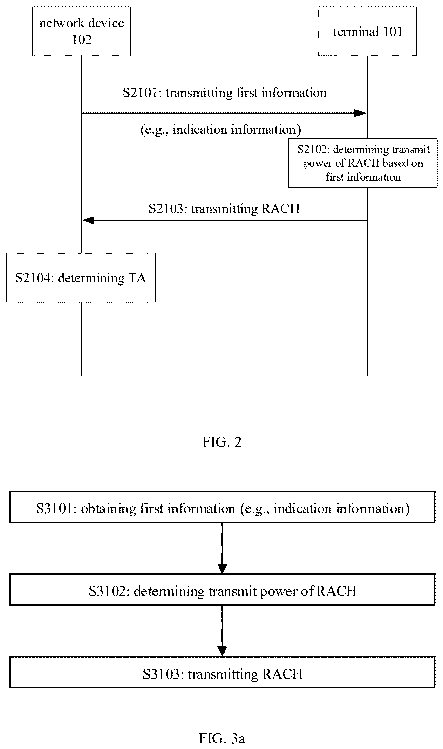

FIG. 2 is an interactive schematic diagram of a power control method according to an embodiment of the present disclosure. As illustrated in FIG. 2, embodiments of the present disclosure relate to a power control method for a communication system 100, and the above method includes:

Step S2101: the network device 102 transmits first information to the terminal 101.

In some embodiments, the terminal 101 receives the first information transmitted by the network device 102.

In some embodiments, the source cell of the network device 102 transmits the first information to the terminal 101. Optionally, the source cell may also be referred to as a serving cell or the like, which is not limited by the present disclosure.

In some embodiments, the terminal 101 receives the first information transmitted by the source cell of the network device 102.

In some embodiments, the first information is used to trigger the terminal 101 to transmit the RACH to the network device 102.

It is worth noting that the terminal 101 transmitting the RACH to the network device 102 may be understood as the terminal 101 transmitting a preamble to the network device 102. In subsequent embodiments of the present disclosure, description will be given as "transmitting RACH". However, it should be understood that the terminal 101 transmitting the RACH to the network device 102 may be interchangeable with the terminal 101 transmitting the preamble to the network device 102.

In some embodiments, the first information is used to trigger the terminal 101 to transmit the RACH to the candidate cell of the network device 102.

In some embodiments, one network device 102 may maintain one or more candidate cells.

In some embodiments, the candidate cell is a candidate cell maintained by the network device 102 corresponding to the source cell.

In some embodiments, the first information is used to instruct/trigger the terminal 101 to initiate a random access to the network device 102.

In some embodiments, the first information is used to instruct/trigger the terminal 101 to initiate a random access to the candidate cell of the network device 102103.

In some embodiments, the first information indicates a transmit power parameter of the RACH.

In some embodiments, the transmit power parameter is used for the terminal 101 to determine the transmit power of the RACH.

In some embodiments, the name of the transmit power parameter is not limited, and may be, for example, "transmission power parameter", "transmit power parameter", or the like.

In some embodiments, the first information is used for the terminal 101 to determine the transmit power of the RACH.

It is worth noting that the transmit power of the RACH may be understood as the transmit power of the preamble, and the terminal 101 may transmit the preamble to the network device 102 based on the transmit power of the RACH. In subsequent embodiments of the present disclosure, description will be made with reference to "transmit power of RACH". However, it should be understood that the transmit power of the RACH may be interchangeable with the transmit power of the preamble.

It is worth noting that the name of the transmit power is not limited, and may be, for example, "sending power", "transmission power", or the like, and the present disclosure does not limit the name of the transmit power.

In some embodiments, the first information is, for example, "indication information", "configuration information", and the like, and the present disclosure does not limit the name of the first information.

In some embodiments, the first information may be downlink control information (DCI).

In some embodiments, the network device 102 transmits a DCI to the terminal 101, and the DCI includes first information. Optionally, the terminal 101 receives the DCI described above.

In some embodiments, the terminal 101 may determine the transmit power of the RACH.

In some embodiments, the first information indicates a first value of the RACH.

In some embodiments, the first value indicates a transmit power adjustment amount of the RACH.

In some embodiments, the name of the first value is not limited, for example, "power adjustment value", "transmit power adjustment amount", etc., and the present disclosure does not limit the name of the first value.

In some embodiments, the first information includes a first field.

In some embodiments, different values of the first field are used to indicate different first values.

In some embodiments, the name of the first field is not limited, for example, "indication field", "information indication field", "transmit power control command", etc. The present disclosure does not limit the name of the first field.

For example, as illustrated in Table 1, a correspondence table of the first field and the first value is provided.

Table 1

| first field | first value |
|---|---|
| 0 | -2 |
| 1 | -1 |
| 2 | +1 |
| 3 | +2 |

For example, when the value of the first field is 1, the first information is used to indicate that the first value of the RACH is -1.

It is worth noting that the correspondence table between the first field and the first value is not limited to the correspondence illustrated in Table 1, and the present disclosure does not limit the specific correspondence in the correspondence table between the first field and the first value.

In some embodiments, the first information is used to indicate whether the RACH currently transmitted by the terminal 101 to the network device 102 is a retransmitted RACH.

Optionally, the RACH currently transmitted by the terminal 101 to the network device 102 may be understood as the RACH transmitted to the network device 102 by the terminal triggered by the first information this time.

In some embodiments, the first information is used to indicate whether the RACH currently transmitted by the terminal 101 to the candidate cell of the network device 102 is the retransmitted RACH.

In some embodiments, when the network device 102 determines that the RACH previously transmitted by the terminal 101 for measuring TA is not received, the first information is used to indicate that the RACH currently transmitted by the terminal 101 to the network device 102 is the retransmitted RACH.

In some embodiments, when the network device 102 determines that the RACH previously transmitted by the terminal 101 for measuring TA is successfully received, the first information is used to indicate that the RACH currently transmitted by the terminal 101 to the candidate cell of the network device 102 is not the retransmitted RACH.

In some embodiments, the first information is used to indicate a first value of the RACH, and the first information is used to indicate whether the RACH currently transmitted by the terminal 101 to the candidate cell is the retransmitted RACH.

In some embodiments, the first information is used to indicate a beam of the RACH transmitted by the terminal 101 to the candidate cell.

In step S2102, the terminal 101 determines the transmit power of the RACH based on the first information.

In some embodiments, determining, by the terminal 101, the transmit power of the RACH based on the first information includes at least one of the following:

the first information indicates a first value, and the terminal 101 determines the transmit power of the RACH based on the first value;

the first information indicates a first value, and the terminal 101 determines the transmit power of the RACH based on the second value;

optionally, the second value is determined based on the first value received within the first time period.

Optionally, the name of the second value is not limited, for example, "power adjustment value", "transmit power adjustment amount", or the like, and the present disclosure does not limit the name of the second value.

Optionally, the name of the first time period is not limited, for example, "a preset time period", "a time threshold", or the like, and the present disclosure does not limit the name of the first time period.

Optionally, the terminal 101 determines the first time period. In some other embodiments, the network device 102 configures the first time period for the terminal. The first information indicates that the RACH transmitted by the terminal 101 triggered this time is a retransmitted RACH, and the terminal 1012 determines the transmit power of the RACH based on the retransmission count of the RACH.

The first information indicates that the RACH transmitted by the terminal 101 triggered this time is not a retransmitted RACH, and the terminal 101 determines the transmit power of the RACH based on the retransmission count of the RACH.

The first information indicates a first value, and the first information indicates that the RACH transmitted by the terminal 101 triggered this time is a retransmitted RACH, and the terminal 101 determines the transmit power of the RACH based on the first value and the retransmission count of the RACH.

The first information indicates a first value, and the first information indicates that the RACH transmitted by the terminal 101 triggered this time is a retransmitted RACH, and the terminal 101 determines the transmit power of the RACH based on the second value and the retransmission count of the RACH.

The first information indicates a first value, and the first information indicates that the RACH transmitted by the terminal 101 triggered this time is not a retransmitted RACH, and the terminal 101 determines the transmit power of the RACH based on the first value and the retransmission count of the RACH.

The first information indicates a first value, and the first information indicates that the RACH transmitted by the terminal 101 triggered this time is not a retransmitted RACH, and the terminal 101 determines the transmit power of the RACH based on the second value and the number of times of retransmission of the RACH.

Optionally, for a specific implementation mode in which the first information indicates the first value, reference may be made to the optional implementation mode regarding the first value in step S2101 and other associated parts in embodiments related to FIG. 2, which is not be repeated here.

Optionally, the terminal 101 determines the transmit power of the RACH based on the first value.

In some embodiments, the terminal 101 determining the transmit power of the RACH based on the first value satisfies the following relationship: $P_{RACH} = \min \{P_{CMAX}, P_{traget} + PL + \delta\}$.

In some embodiments, $P_{RACH}$ represents the transmit power of the RACH, $P_{CMAX}$ represents a maximum transmit power, $P_{traget}$ represents a target receive power of the RACH, $PL$ represents a path loss determined based on a downlink reference signal, and $\delta$ represents the first value. Optionally, $P_{CMAX}$ represents the maximum transmit power allowed by the terminal *101*. $P_{traget}$ represents the target receive power of the RACH capable of being received by the network device 102. Optionally, $P_{CMAX}$, $P_{traget}$ is determined by the configuration of the network device. Optionally, $P_{CMAX}$, $P_{traget}$ is specified by a protocol. Optionally, $PL$ represents the path loss estimated based on the downlink reference signal.

In some embodiments, the first information indicates that the beam of the RACH currently transmitted by the terminal 101 changes (for example, the SSB index is different from the SSB index of the RACH previously transmitted by the terminal 101), and in an embodiment, the first value indicated by the first information is not considered, that is, the transmit power of the current RACH satisfies the following relationship: $P_{RACH} = \min\{P_{CMAX}, P_{target} + PL\}$. Optionally, considering the first value indicated by the first information, that is, the transmit power of the RACH satisfies the following relationship: $P_{RACH} = \min\{P_{CMAX}, P_{target} + PL + \delta\}$.

Optionally, the terminal 101 determines the transmit power of the RACH based on the second value.

In some embodiments, the terminal 101 determines the transmit power of the RACH based on the second value, the maximum transmit power of the terminal 101, the target reception power of the RACH, and the path loss.

Optionally, the terminal 101 determining the transmit power of the RACH based on the second value satisfies the following relationship: $P_{RACH} = \min\{P_{CMAX}, P_{target} + PL + \Delta\}$. Optionally, $R_{ACH}$ represents the transmit power of the RACH, $P_{CMAX}$ represents a maximum transmit power, $P_{traget}$ represents a target receive power of the RACH, $PL$ represents a path loss determined based on a downlink reference signal, and $\Delta$ represents the second value. Optionally, the second value satisfies the following relationship: $\Delta = \Delta\left(i - k\right) + \Sigma_{i-k+1}^{i} \delta_{m}$. Optionally, $\Delta$ represents the second value, i represents a current time, k represents any time before the current time, and $\delta_{m}$ represents the first value received for m-th time.

In some embodiments, if the first information indicates that the beam of the RACH currently transmitted by the terminal 101 changes (for example, the SSB index is different from the SSB index of the RACH previously transmitted by the terminal 101), the second value is determined to be a preset value. Optionally, the second value is 0. Optionally, the first value indicated by the first information is not considered, that is, the transmit power of the RACH satisfies the following relationship: $P_{RACH} = \min\{P_{CMAX}, P_{target} + PL\}$. Optionally, considering the first value indicated by the first information, that is, the transmit power of the RACH satisfies the following relationship: $P_{RACH} = \min\{P_{CMAX}, P_{target} + PL + \delta\}$.

Optionally, the first information is used to indicate whether the RACH transmitted by the terminal 101 triggered this time is a retransmitted RACH. Optionally, the terminal 101 determines whether the RACH transmitted by the terminal 101 is a retransmitted RACH based on the first information. Optionally, the first information is used to indicate whether the RACH transmitted by the terminal 101 to the candidate cell of the network device 102 is a retransmitted RACH. Optionally, the terminal 101 determines whether the RACH transmitted by the terminal 101 to the candidate cell of the network device 102 is a retransmitted RACH based on the first information.

Optionally, the terminal 101 determines that the RACH transmitted by the terminal 101 to the candidate cell is a retransmitted RACH based on the first information. Optionally, the terminal 101 needs to determine the retransmission count of the RACH.

Optionally, the terminal 101 determines the retransmission count of the RACH based on a counter. Optionally, an initial value of the counter is a preset value. For example, the preset value is 1. For another example, the initial value of the counter is configured by the network device 102. Optionally, the value of the counter has a maximum value. For example, the maximum value of the counter is configured by the network device.

In some embodiments, the terminal 101 determines that the RACH currently transmitted by the terminal 101 to the candidate cell is a retransmitted RACH based on the first information, increments the value corresponding to the counter corresponding to the candidate cell by one, and determines which retransmission the currently triggered RACH is based on the current value of the counter of the candidate cell. For example, if the current value of the counter of the candidate cell is 3, the currently triggered RACH is the third retransmission, and it may be understood that the retransmission count of the RACH is 3.

In some embodiments, different candidate cells correspond to different counters.

Optionally, the initial value and the maximum value of the counters of different candidate cells may be the same or different. Optionally, the network device 102 configures the initial value and the maximum value of the counters of different candidate cells, respectively. Optionally, the retransmission count of the RACH transmitted by the terminal 101 to the different candidate cells is determined based on counters corresponding to the different candidate cells.

Optionally, the terminal 101 determines the transmit power of the RACH based on the retransmission count of the RACH.

In some embodiments, the terminal 101 determines the transmit power of the RACH based on the retransmission count of the RACH and the power ramping value.

In some embodiments, the terminal 101 determining the transmit power of the RACH based on the retransmission count of the RACH and the power ramping value satisfies the following relationship:

$$P_{RACH} = \min\left\{P_{CMAX}, P_{traget} + PL\right\}.$$

where $P_{RACH}$ represents the transmit power of the RACH, $P_{CMAX}$ represents a maximum transmit power, $P_{traget}$ = $preambleReceivedTargetPower + DELTA\_PREAMBLE + (COUNTER - 1) \times STEP$, $preambleReceivedTargetPower$ represents an initial random access preamble power configured by the network device 102, $DELTA\_PREAMBLE$ represents a power offset value determined based on a preamble format, $COUNTER$ represents the retransmission count of the RACH, $STEP$ represents the power ramping value, and $PL$ represents a path loss determined based on a downlink reference signal.

In some embodiments, $STEP$ may reuse the existing ramping value. In some other embodiments, $STEP$ is determined based on the reconfiguration by the network device.

Optionally, the first information is used to indicate that the RACH transmitted by the terminal 101 triggered this time is not a retransmitted RACH. Optionally, the terminal 101 determines that the RACH transmitted by the terminal 101 to the candidate cell is not a retransmitted RACH based on the first information. Optionally, the value of the counter of the candidate cell is reset. For example, the value of the counter of the candidate cell is reset to 1.

Optionally, the first information is used to indicate a beam of the RACH transmitted by the terminal 101 to the candidate cell triggered this time.

Optionally, the terminal 101 determines a beam of the RACH transmitted by the terminal 101 to the candidate cell based on the first information. Optionally, if the SSB index changes, the change of the beam may be determined, and the value of the counter of the candidate cell may be reset. For example, the value of the counter of the candidate cell is reset to 1.

Optionally, the terminal 101 determines the transmit power of the RACH based on the retransmission count of the RACH. For its optional implementation, reference may be made to the optional implementation of the step S2102 in FIG. 2, and other associated parts in embodiments related to FIG. 2, e.g., the optional implementation where the terminal 101 determines that the RACH transmitted by the terminal 101 to the candidate cell is a retransmitted RACH based on the first information, and the terminal 101 determines the transmit power of the RACH based on the retransmission count of the RACH, which will not be repeated here.

Optionally, the first information is used to indicate the first value of the RACH, and the first information is used to indicate whether the RACH transmitted by the terminal 101 triggered this time to the candidate cell is a retransmitted RACH.

Optionally, the first information is used to indicate the first value of the RACH, and the first information is used to indicate that the RACH transmitted by the terminal 101 triggered this time to the candidate cell is a retransmitted RACH.

Optionally, the terminal 101 determines the transmit power of the RACH based on the first value and the retransmission count of the RACH.

In some embodiments, the terminal 101 determines the transmit power of the RACH based on the first value, the retransmission count of the RACH, and the power ramping value.

In some embodiments, the terminal 101 determining the transmit power of the RACH based on the first value, the retransmission count of the RACH, and the power ramping value, satisfies the following relationship:

$$P_{RACH} = \min\left\{P_{CMAX}, P_{traget} + PL + \delta\right\}$$

where $P_{RACH}$ represents the transmit power of the RACH, $P_{CMAX}$ represents a maximum transmit power, $P_{traget} = preambleReceivedTargetPower + DELTA\_PREAMBLE + (COUNTER - 1) \times STEP$, $preambleReceivedTargetPower$ represents an initial random access preamble power configured by the network device 102, $DELTA\_PREAMBLE$ represents a power offset value determined based on a preamble format, $COUNTER$ represents the retransmission count of the RACH, $STEP$ represents the power ramping value, $PL$ represents a path loss determined based on a downlink reference signal, and $\delta$ represents the first value.

In some embodiments, the first information indicates that the beam of the RACH currently transmitted by the terminal 101 changes (for example, the SSB index is different from the SSB index of the RACH previously transmitted by the terminal 101), and in an embodiment, the first value indicated by the first information is not considered, that is, the transmit power of the RACH satisfies the following relationship: $P_{RACH} = \min\{P_{CMAX}, P_{target} + PL\}$. Optionally, considering the first value indicated by the first information, that is, the transmit power of the RACH satisfies the following relationship: $P_{RACH} = \min\{P_{CMAX}, P_{target} + PL + \delta\}$.

Optionally, the first information is used to indicate the first value of the RACH, and the first information is used to indicate that the RACH transmitted by the terminal 101 to the candidate cell is a retransmitted RACH.

Optionally, the terminal 101 determines the transmit power of the RACH based on the second value and the retransmission count of the RACH. For the optional implementation of the retransmission count of the RACH, reference may be made to the optional implementation of step S2102 in FIG. 2 and other associated parts in the embodiment related to FIG. 2, which will not be repeated here.

In some embodiments, the terminal 101 determines the transmit power of the RACH based on the second value, the retransmission count of the RACH, and the power ramping value.

Optionally, the second value is determined based on the first value received within the first time period.

In some embodiments, the terminal 101 determining the transmit power of the RACH based on the second value, the retransmission count of the RACH, and the power ramping value, satisfies the following relationship:

$$P_{RACH} = \min\left\{P_{CMAX}, P_{traget} + PL + \Delta\right\}$$

Optionally, $P_{RACH}$ represents the transmit power of the **RACH,** $P_{CMAX}$ represents a maximum transmit power, $P_{target} = preambleReceivedTargetPower + DELTA\_PREAMBLE + (COUNTER - 1) \times STEP$, $preambleReceivedTargetPower$ represents an initial random access preamble power configured by the network device 102, $DELTA\_PREAMBLE$ represents a power offset value determined based on a preamble format, $DELTA\_PREAMBLE$ represents the retransmission count of the RACH, $STEP$ represents the power ramping value, $PL$ represents a path loss determined based on a downlink reference signal, and $\Delta$ represents the second value. Optionally, the second value satisfies the following relationship: $\Delta = \Delta(i - k) + \Sigma_{i-k+1}^{i}\delta_m$. Optionally, $\Delta$ represents the second value, i represents a current time, k represents any time before the current time, and $\delta_m$ represents the first value received for m-th time.

In some embodiments, in a case where the first information indicates that a beam of the RACH transmitted by the terminal 101 changes, the second value is determined to be a preset value. Optionally, the second value is 0. Optionally, the first value indicated by the first information is not considered, that is, the transmit power of the RACH satisfies the following relationship: $P_{RACH} = \min\{P_{CMAX}, P_{target} + PL\}$. Optionally, considering the first value indicated by the first information, that is, the transmit power of the RACH satisfies the following relationship:

$$P_{RACH} = \min\left\{P_{CMAX}, P_{target} + PL + \delta\right\}$$

Optionally, the first information is used to indicate the first value of the RACH, and the first information is used to indicate that the RACH transmitted by the terminal 101 to the candidate cell is not a retransmitted RACH.

Optionally, the terminal 101 determines the transmit power of the RACH based on the first value and the retransmission count of the RACH. For the optional implementation of the first value, reference may be made to the optional implementation of step S2101 in FIG. 2 and other associated parts in the embodiment related to FIG. 2, which will not be repeated here. For the optional implementation of the retransmission count of the RACH, reference may be made to the optional implementation of step S2102 in FIG. 2 and other associated parts in the embodiment related to FIG. 2, which will not be repeated here.

Optionally, the first information is used to indicate the first value of the RACH, and the first information is used to indicate that the RACH transmitted by the terminal 101 to the candidate cell is not a retransmitted RACH.

Optionally, the terminal 101 determines the transmit power of the RACH based on the second value and the retransmission count of the RACH. For the optional implementation of the retransmission count of the RACH and the second value, reference may be made to the optional implementation of step S2102 in FIG. 2 and other associated parts in the embodiment related to FIG. 2, which will not be repeated here.

Optionally, when the second value is adopted for the terminal 101 to determine the transmit power of the RACH, the terminal 101 determines that the second value to be a preset value if the first information indicates that the beam or the SSB index of the RACH transmitted by the terminal 101 changes. Optionally, the preset value is a value indicated by the network device 102 for the terminal for the first time. Optionally, the preset value may be 0 or another preset value.

In some embodiments, the first information indicates a first value, and the terminal 101 determines the transmit power of the RACH based on the first value. Optionally, in a case where the first information indicates the first value, the terminal 101 determines the transmit power of the RACH based on the first value. Optionally, in response to the first information indicating the first value, the terminal 101 determines the transmit power of the RACH based on the first value. Optionally, when the first information indicates the first value, the terminal 101 determines the transmit power of the RACH based on the first value.

In some embodiments, the first information indicates a first value, and the terminal 101 determines the transmit power of the RACH based on the second value. Optionally, in a case where the first information indicates the first value, the terminal 101 determines the transmit power of the RACH based on the second value. Optionally, in response to the first information indicating the first value, the terminal 101 determines the transmit power of the RACH based on the second value. Optionally, when the first information indicates the first value, the terminal 101 determines the transmit power of the RACH based on the second value.

In some embodiments, the first information indicates that the RACH transmitted by the terminal 101 is a retransmitted RACH, and the terminal 101 determines the transmit power of the RACH based on the retransmission count of the RACH. Optionally, in a case where the first information indicates that the RACH transmitted by the terminal 101 is a retransmitted RACH, the terminal 101 determines the transmit power of the RACH based on the retransmission count of the RACH. Optionally, in response to the first information indicating that the RACH transmitted by the terminal 101 is a retransmitted RACH, the terminal 101 determines the transmit power of the RACH based on the retransmission count of the RACH. Optionally, when the first information indicates that the RACH transmitted by the terminal 101 is a retransmitted RACH, the terminal 101 determines the transmit power of the RACH based on the retransmission count of the RACH.

In some embodiments, the first information indicates that the RACH transmitted by the terminal 101 is not a retransmitted RACH, and the terminal 101 determines the transmit power of the RACH based on the retransmission count of the RACH. Optionally, in a case where the first information indicates that the RACH transmitted by the terminal 101 is not a retransmitted RACH, the terminal 101 determines the transmit power of the RACH based on the retransmission count of the RACH. Optionally, in response to the first information indicating that the RACH transmitted by the terminal 101 is not a retransmitted RACH, the terminal 101 determines the transmit power of the RACH based on the retransmission count of the RACH. Optionally, when the first information indicates that the RACH transmitted by the terminal 101 is not a retransmitted RACH, the terminal 101 determines the transmit power of the RACH based on the retransmission count of the RACH.

In some embodiments, the first information indicates a first value, the first information indicates that the RACH transmitted by the terminal 101 is a retransmitted RACH, and the terminal 101 determines the transmit power of the RACH based on the first value and the retransmission count of the RACH. Optionally, in a case where the first information indicates a first value, and the first information indicates that the RACH transmitted by the terminal 101 is a retransmitted RACH, the terminal 101 determines the transmit power of the RACH based on the first value and the retransmission count of the RACH. Optionally, in response to the first information indicating a first value, and the first information indicating that the RACH transmitted by the terminal 101 is a retransmitted RACH, the terminal 101 determines the transmit power of the RACH based on the first value and the retransmission count of the RACH. Optionally, when the first information indicates a first value, and the first information indicates that the RACH transmitted by the terminal 101 is a retransmitted RACH, the terminal 101 determines the transmit power of the RACH based on the first value and the retransmission count of the RACH.

In some embodiments, the first information indicates a first value, the first information indicates that the RACH transmitted by the terminal 101 is a retransmitted RACH, and the terminal 101 determines the transmit power of the RACH based on the first value and the retransmission count of the RACH. Optionally, in a case where the first information indicates a first value, and the first information indicates that the RACH transmitted by the terminal 101 is a retransmitted RACH, the terminal 101 determines the transmit power of the RACH based on the first value and the retransmission count of the RACH. Optionally, in response to the first information indicating a first value, and the first information indicating that the RACH transmitted by the terminal 101 is a retransmitted RACH, the terminal 101 determines the transmit power of the RACH based on the first value and the retransmission count of the RACH. Optionally, when the first information indicates a first value, and the first information indicates that the RACH transmitted by the terminal 101 is a retransmitted RACH, the terminal 101 determines the transmit power of the RACH based on the first value and the retransmission count of the RACH.

In some embodiments, the first information indicates a first value, and the first information indicates that the RACH transmitted by the terminal 101 is a retransmitted RACH, and the terminal 101 determines the transmit power of the RACH based on the first value and the retransmission count of the RACH. Optionally, in a case where the first information indicates a first value, and the first information indicates that the RACH transmitted by the terminal 101 is a retransmitted RACH, the terminal 101 determines the transmit power of the RACH based on the second value and the retransmission count of the RACH. Optionally, in response to the first information indicating a first value, and the first information indicating that the RACH transmitted by the terminal 101 is a retransmitted RACH, the terminal 101 determines the transmit power of the RACH based on the second value and the retransmission count of the RACH. Optionally, when the first information indicates a first value, and the first information indicates that the RACH transmitted by the terminal 101 is a retransmitted RACH, the terminal 101 determines the transmit power of the RACH based on the second value and the retransmission count of the RACH.

In some embodiments, the first information indicates a first value, the first information indicates that the RACH transmitted by the terminal 101 is not a retransmitted RACH, and the terminal 101 determines the transmit power of the RACH based on the first value and the retransmission count of the RACH. Optionally, in a case where the first information indicates a first value, and the first information indicates that the RACH transmitted by the terminal 101 is not a retransmitted RACH, the terminal 101 determines the transmit power of the RACH based on the first value and the retransmission count of the RACH. Optionally, in response to the first information indicating a first value, and the first information indicating that the RACH transmitted by the terminal 101 is not a retransmitted RACH, the terminal 101 determines the transmit power of the RACH based on the first value and the retransmission count of the RACH. Optionally, when the first information indicates a first value, and the first information indicates that the RACH transmitted by the terminal 101 is not a retransmitted RACH, the terminal 101 determines the transmit power of the RACH based on the first value and the retransmission count of the RACH.

In some embodiments, the first information indicates a first value, the first information indicates that the RACH transmitted by the terminal 101 is not a retransmitted RACH, and the terminal 101 determines the transmit power of the RACH based on the second value and the retransmission count of the RACH. Optionally, in a case where the first information indicates a first value, and the first information indicates that the RACH transmitted by the terminal 101 is not a retransmitted RACH, the terminal 101 determines the transmit power of the RACH based on the second value and the retransmission count of the RACH. Optionally, in response to the first information indicating a second value, and the first information indicating that the RACH transmitted by the terminal 101 is not a retransmitted RACH, the terminal 101 determines the transmit power of the RACH based on the second value and the retransmission count of the RACH. Optionally, when the first information indicates a first value, and the first information indicates that the RACH transmitted by the terminal 101 is not a retransmitted RACH, the terminal 101 determines the transmit power of the RACH based on the second value and the retransmission count of the RACH.

In step S2103: the terminal 101 transmits the RACH to the network device 102.

In some embodiments, the terminal 101 transmits the RACH to the network device 102 based on the transmit power of the RACH.

In some embodiments, the terminal 101 transmits the RACH to the candidate cell of the network device 102 based on the transmit power of the RACH.

In some embodiments, the RACH is used to determine the TA of the terminal to the candidate cell.

In step S2104: the network device 102 determines the TA.

In some embodiments, the network device 102 determines the TA based on the RACH transmitted by the terminal 101.

In some embodiments, the network device 102 determines the TA based on the preamble transmitted by the terminal 101.

In some embodiments, the network device 102 determines the TA based on the RACH transmitted by the terminal 101.

In some embodiments, the candidate cell of the network device 102 determines the TA.

In some embodiments, the candidate cell of the network device 102 determines the TA based on the RACH transmitted by the terminal 101.

In some embodiments, the candidate cell of the network device 102 determines the TA based on the preamble transmitted by the terminal 101.

In some embodiments, the network device 102 determines the TA of the terminal to the candidate cell.

In some embodiments, the network device 102 determines the TA of the candidate cell based on the RACH transmitted by the terminal 101.

In some embodiments, the network device 102 determines the TA of the candidate cell based on the preamble transmitted by the terminal 101.

The power control method according to embodiments of the present disclosure may include at least one of steps S2101 to S2104. For example, step 2101 may be implemented as an independent embodiment, step 2102 may be implemented as an independent embodiment, step S2101+step S2103 may be implemented as an independent embodiment, step S2102+step S3103 may be implemented as an independent embodiment, and step S2101+step S2102+step S2103 may be implemented as an independent embodiment, which is not limited to this.

In some embodiments, steps S2102, S2103, S2104 are optional, and one or more of these steps may be omitted or replaced in different embodiments.

In some embodiments, steps S2101, S2103, S2104 are optional, and one or more of these steps may be omitted or replaced in different embodiments.

FIG. 3a is a flowchart of a power control method according to an embodiment of the present disclosure. As illustrated in FIG. 3a, embodiments of the present disclosure relate to a power control method, which is performed by a terminal 101, and the method includes the following.

In step S 3101, first information is obtained.

For the optional implementation of step S3101, reference may be made to the optional implementation of step S2101 in FIG. 2 and other associated parts in the embodiment related to FIG. 2, which will not be repeated here.

In some embodiments, the terminal 101 receives the first information from the network device 102, but may also receive the first information from other subjects. The first information may indicate the first information, i.e. the first information may indicate a first number of beam combinations.

In some embodiments, the terminal 101 obtains the first information specified by the protocol.

In some embodiments, the terminal 101 obtains the first information from an upper layer (s).

In some embodiments, the terminal 101 performs processing to obtain the first information.

In some embodiments, step S3101 is omitted, and the terminal 101 autonomously implements determining of the first information, that is, determining the first number of beam combinations, or above function is default.

Step S3102: the transmit power of the RACH is determined.

For the optional implementation of step S3102, reference may be made to the optional implementation of step S2102 in FIG. 2 and other associated parts in the embodiment related to FIG. 2, which will not be repeated here.

In some embodiments, the transmit power of the RACH is determined based on the first information received by the terminal 101.

In some embodiments, the transmit power of the RACH is determined based on DCI signaling received by the terminal 101.

Step S3103: RACH is transmitted.

For the optional implementation of step S3103, reference may be made to the optional implementation of step S2103 in FIG. 2 and other associated parts in the embodiment related to FIG. 2, which will not be repeated here.

In some embodiments, the terminal 101 transmits the RACH to the network device 102, but the terminal 101 is not limited thereto, and may transmit the RACH to other subjects.

In some embodiments, the terminal 101 transmits the RACH to the candidate cell of the network device 102.

Optionally, the above-described RACH is used for the network device 102 to determine the TA. Optionally, the above-described RACH is used for the network device 102 to determine the TA of the candidate cell. For its optional implementation, reference may be made to the optional implementation of step S2104 in FIG. 2 and other associated parts in the embodiment related to FIG. 2, which will not be repeated here.

The power control method according to embodiments of the present disclosure may include at least one of steps S3101 to S3103. For example, step 3102 may be implemented as an independent embodiment, step 3103 may be implemented as an independent embodiment, step S3101+step S3102 may be implemented as an independent embodiment, step S3101+step S3103 may be implemented as an independent embodiment, and step S3101+step S3102+step S3103 may be implemented as an independent embodiment, which is not limited to this.

In some embodiments, step S3101 is optional, and one or more of these steps may be omitted or replaced in different embodiments.

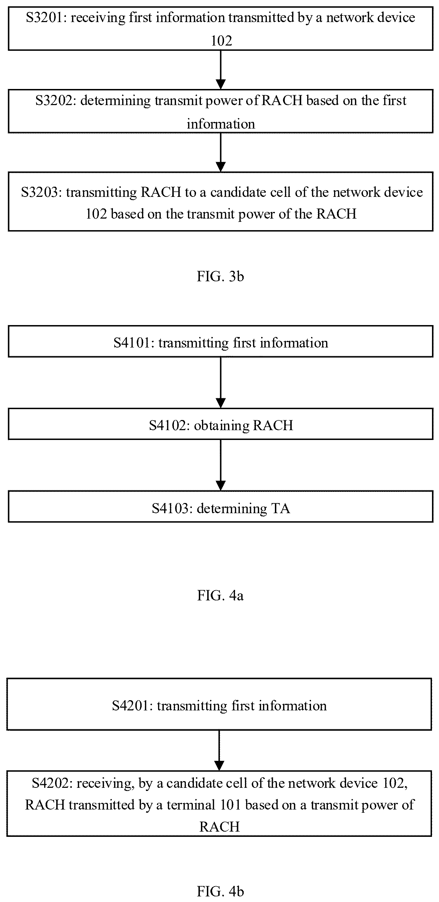

FIG. 3b is a flowchart of a power control method according to an embodiment of the present disclosure. As illustrated in FIG. 3b, embodiments of the present disclosure relate to a power control method, which is performed by a terminal 101, and the method includes the following.

In step S3201: the first information transmitted by the network device 102 is received.

For the optional implementation of step S3201, reference may be made to step S2101 in FIG. 2 and other associated parts in the embodiment related to FIG. 2. In an optional embodiment, an optional implementation of step S3201 may be referred to step S3101 in FIG. 3a and other associated parts of the embodiment related to FIG. 3a, which will not be repeated here.

In some embodiments, the first information indicates a first value of the RACH, and the first value indicates a transmit power adjustment amount of the RACH.

In some embodiments, the first information includes a first field, and different values of the first field correspond to different first values.

In some embodiments, the first information indicates whether the RACH currently transmitted by the terminal 101 to the candidate cell is a retransmitted RACH.

In some embodiments, the first information is used to indicate a beam or an SSB index of the RACH transmitted by the terminal 101 to the candidate cell changes.

In some embodiments, the first information is used to indicate a first value of the RACH, and the first information is used to indicate whether the RACH currently transmitted by the terminal 101 to the candidate cell is the retransmitted RACH.

In an optional embodiment, for the optional implementation of step S3201, reference may be made to step S2101 in FIG. 2 and other associated parts in the embodiment related to FIG. 2. In an optional embodiment, an optional implementation of step S3201 may be referred to step S3101 in FIG. 3a and other associated parts of the embodiment related to FIG. 3a, which will not be repeated here.

In step S3202: the transmit power of the RACH is determined based on the first information.

For the optional implementation of step S3202, reference may be made to step S2102 in FIG. 2 and other associated parts in the embodiment related to FIG. 2. In an optional embodiment, an optional implementation of step S3202 may be referred to step S3102 in FIG. 3a and other associated parts of the embodiment related to FIG. 3a, which will not be repeated here.

In some embodiments, the terminal 101 determines the transmit power of the RACH based on the first value.

In some embodiments, the terminal 101 determining the transmit power of the RACH based on the first value satisfies the following relationship:

$$P_{RACH} = \min \left\{ P_{CMAX}, P_{traget} + PL + \delta \right\}$$

where $P_{RACH}$ represents the transmit power of the RACH, $P_{CMAX}$ represents a maximum transmit power, $P_{traget}$ represents a target receive power of the RACH, $PL$ represents a path loss determined based on a downlink reference signal, and $\delta$ represents the first value.

In some embodiments, the terminal 101 determines the transmit power based on a second value, and the second value is determined based on the first value received within a first time period.

In some embodiments, the terminal 101 determining the transmit power based on the second value satisfies the following relationship:

$$P_{RACH} = \min \left\{ P_{CMAX}, P_{target} + PL + \Delta \right\}$$

where $P_{RACH}$ represents the transmit power of the RACH, $P_{CMAX}$ represents a maximum transmit power, $P_{target}$ represents a target receive power of the RACH, $PL$ represents a path loss determined based on a downlink reference signal, and $\Delta$ represents the second value.

In some embodiments, the terminal 101 determines that the RACH currently transmitted by the terminal 101 to the candidate cell is a retransmitted RACH based on the first information, and the terminal 101 determines the retransmission count of the RACH currently transmitted by the terminal to the candidate cell.

In some embodiments, the value corresponding to the counter of the candidate cell is incremented by one, the retransmission count of the RACH is determined based on the value corresponding to the counter of the candidate cell, and different candidate cells correspond to different counters.

In some embodiments, based on the first information, the terminal 101 determines that the RACH currently transmitted by the terminal 101 to the candidate cell is not a retransmitted RACH or the beam of the RACH transmitted by the terminal 101 to the candidate cell changes or the SSB index of the RACH transmitted by the terminal 101 to the candidate cell changes, and the counter of the candidate cell is reset to 1.

In some embodiments, the terminal 101 determines the transmit power of the RACH based on the retransmission count of the RACH and the power ramping value.

In some embodiments, the terminal 101 determining the transmit power of the RACH based on the retransmission count of the RACH and the power ramping value satisfies the following relationship:

$$P_{RACH} = \min\left\{P_{CMAX}, P_{traget} + PL\right\}.$$

where $P_{RACH}$ represents the transmit power of the RACH, $P_{CMAX}$ represents a maximum transmit power, $P_{traget}$ = *preambleReceivedTargetPower + DELTA_PREAMBLE + (COUNTER - 1) × STEP*, *preambleReceivedTargetPower* represents an initial random access preamble power configured by the network device 102, *DELTA_PREAMBLE* represents a power offset value determined based on a preamble format, *COUNTER* represents the retransmission count of the RACH, *STEP* represents the power ramping value, and *PL* represents a path loss determined based on a downlink reference signal.

In some embodiments, the terminal 101 determines the transmit power of the RACH based on the first value, the retransmission count of the RACH, and the power ramping value.

In some embodiments, the terminal 101 determining the transmit power of the RACH based on the first value, the retransmission count of the RACH, and the power ramping value, satisfies the following relationship:

$$P_{RACH} = \min\left\{P_{CMAX}, P_{traget} + PL + \delta\right\}.$$

where $P_{RACH}$ represents the transmit power of the RACH, $P_{CMAX}$ represents a maximum transmit power, $P_{traget}$ = *preambleReceivedTargetPower + DELTA_PREAMBLE + (COUNTER - 1) × STEP*, *preambleReceivedTargetPower* represents an initial random access preamble power configured by the network device 102, *DELTA_PREAMBLE* represents a power offset value determined based on a preamble format, *COUNTER* represents the retransmission count of the RACH, *STEP* represents the power ramping value, *PL* represents a path loss determined based on a downlink reference signal, and $\delta$ represents the first value.

In some embodiments, the terminal 101 determines the transmit power of the RACH based on the second value, the retransmission count of the RACH, and the power ramping value, and the second value is determined based on the first value received within the first time period.

In some embodiments, the terminal 101 determining the transmit power of the RACH based on the second value, the retransmission count of the RACH, and the power ramping value, satisfies the following relationship:

$$P_{RACH} = \min\left\{P_{CMAX}, P_{traget} + PL + \Delta\right\}.$$

where $P_{RACH}$ represents the transmit power of the RACH, $P_{CMAX}$ represents a maximum transmit power, $P_{traget}$ = *preambleReceivedTargetPower + DELTA_PREAMBLE + (COUNTER - 1) × STEP*, *preambleReceivedTargetPower* represents an initial random access preamble power configured by the network device 102, *DELTA_PREAMBLE* represents a power offset value determined based on a preamble format, *DELTA_PREAMBLE* represents the retransmission count of the RACH, *STEP* represents the power ramping value, *PL* represents a path loss determined based on a downlink reference signal, and $\Delta$ represents the second value.

In some embodiments, the second value satisfies the following relationship:

$$\Delta = \Delta(i - k) + \Sigma_{i-k+1}^{i}\delta_m.$$

where $\Delta$ represents the second value, i represents a current time, k represents any time before the current time, and $\delta_m$ represents the first value received for m-th time.

In some embodiments, based on the first information, the terminal 101 determines that the beam or the SSB index of the RACH transmitted by the terminal 101 changes, and the second value is determined to be a preset value.

In an optional embodiment, for the optional implementation of step S3202, reference may be made to step S2102 in FIG. 2 and other associated parts in the embodiment related to FIG. 2. In an optional embodiment, an optional implementation of step S3202 may be referred to step S3102 in FIG. 3a and other associated parts of the embodiment related to FIG. 3a, which will not be repeated here.

In step S3203: the RACH is transmitted to the candidate cell of the network device 102 based on the transmit power of the RACH.

For the optional implementation of step S3203, reference may be made to step S2103 in FIG. 2 and other associated parts in the embodiment related to FIG. 2. In an optional embodiment, an optional implementation of step S3203 may be referred to step S3103 in FIG. 3a and other associated parts of the embodiment related to FIG. 3a, which will not be repeated here.

The power control method according to embodiments of the present disclosure may include at least one of steps S3201 to S3203. For example, step 3102 may be implemented as an independent embodiment, step 3203 may be implemented as an independent embodiment, step S3201+step S3202 may be implemented as an independent embodiment, step S3201+step S3203 may be implemented as an independent embodiment, and step S3201+step S3202+step S3203 may be implemented as an independent embodiment, which is not limited to this.

In some embodiments, step S3201 is optional, and one or more of these steps may be omitted or replaced in different embodiments.

In some embodiments, step S3203 is optional, and one or more of these steps may be omitted or replaced in different embodiments.

In embodiments of the present disclosure, step S3201 may be combined with step S3102 of FIG. 3a, step S3202 may be combined with step S3203 of FIG. 3a, and step S3201 may be combined with steps S3102 and S3103 of FIG. 3a, which is not limited to this.

FIG. 4a is a flowchart of a power control method according to an embodiment of the present disclosure. As illustrated in FIG. 4a, embodiments of the present disclosure relate to a power control method, which is performed by a network device 102, and the method includes the following:

Step S4101: the first information is transmitted.

For the optional implementation of step S4101, reference may be made to the optional implementation of step S2101 in FIG. 2 and other associated parts in the embodiment related to FIG. 2, which will not be repeated here.

In some embodiments, the network device 102 transmits the first information to the terminal 101, but the network device 102 is not limited to this, and may transmit the first information to other subjects.

Optionally, the first information is used to trigger the terminal 101 to transmit the RACH to the candidate cell of the network device 102, and the first information is used for the terminal 101 to determine the transmit power of the RACH. For its optional implementation, reference may be made to the optional implementation of step S2102 in FIG. 2 and other associated parts in the embodiment related to FIG. 2, which will not be repeated here.

Step S4102: RACH is obtained.

For the optional implementation of step S4102, reference may be made to the optional implementation of step S2103 in FIG. 2 and other associated parts in the embodiment related to FIG. 2, which will not be repeated here.

In some embodiments, the network device 102 receives the RACH transmitted by the terminal 101, but the network device 102 is not limited to this, and may receive the RACH transmitted by other subjects.

In some embodiments, the network device 102 obtains the RACH specified by the protocol.

In some embodiments, the network device 102 obtains the RACH from an upper layer (s).

In some embodiments, the network device 102 performs processing to obtain the RACH.

In some embodiments, step S4102 is omitted, and the network device 102 autonomously implements the functions indicated by the RACH, or the above functions are default.

In step S4103: the TA is determined.

For the optional implementation of step S4103, reference may be made to the optional implementation of step S2104 in FIG. 2 and other associated parts in the embodiment related to FIG. 2, which will not be repeated here.

The power control method according to embodiments of the present disclosure may include at least one of steps S4101 to S4103. For example, step 4102 may be implemented as an independent embodiment, step 4102 may be implemented as an independent embodiment, step S4101+step S4102 may be implemented as an independent embodiment, and step S4101+step S4102+step S4103 may be implemented as an independent embodiment, which is not limited to this.

In some embodiments, step S4103 is optional, and one or more of these steps may be omitted or replaced in different embodiments.

FIG. 4b is a flowchart of a power control method according to an illustrative embodiment. As illustrated in FIG. 4b, embodiments of the present disclosure relate to a power control method, which is performed by a network device 102, and the method includes the following.

Step S4201: the first information is transmitted.

In some embodiments, the first information is used to trigger the terminal 101 to transmit the random access channel to the candidate cell.

In some embodiments, the first information is used for the terminal 101 to determine the transmit power of the RACH.

For the optional implementation of step S4201, reference may be made to step S2101 in FIG. 2 and other associated parts in the embodiment related to FIG. 2. In an optional embodiment, an optional implementation of step S4201 may be referred to step S4101 in FIG. 4a and other associated parts of the embodiment related to FIG. 4a, which will not be repeated here.

In some embodiments, the first information indicates a first value of the RACH, and the first value indicates a transmit power adjustment amount of the RACH.

In some embodiments, the first information includes a first field, and different values of the first field correspond to different first values.

In some embodiments, the first information indicates whether the RACH currently transmitted by the terminal 101 to the candidate cell is a retransmitted RACH.

In some embodiments, the network device 102 does not receive the RACH previously transmitted by the terminal 101 for measuring TA, and the first indication information is used to indicate that the RACH currently transmitted by the terminal 101 to the candidate cell is a one time retransmission.

In some embodiments, the network device 102 successfully receives the RACH previously transmitted by the terminal 101 for measuring TA, and the first indication information is used to indicate that the RACH currently transmitted by the terminal to the candidate cell is not a retransmission.

In some embodiments, the first information is used to indicate that the RACH currently transmitted by the terminal 101 to the candidate cell is a retransmitted RACH, and the first information is used for the terminal 101 to determine the retransmission count of the RACH.

In some embodiments, the first information is used to indicate that the RACH transmitted by the terminal to the candidate cell is not a retransmitted RACH or a beam of the RACH transmitted by the terminal 101 to the candidate cell changes or an SSB index of the RACH transmitted by the terminal 101 to the candidate cell changes, and the first information is used for the terminal 101 to determine to reset the counter of the candidate cell to 1.

In some embodiments, the first information is used to indicate a first value of the RACH, and the first information is used to indicate whether the RACH transmitted by the terminal 101 to the candidate cell is the retransmitted RACH.

In an optional embodiment, for the optional implementation of step S4201, reference may be made to step S2101 in FIG. 2 and other associated parts in the embodiment related to FIG. 2. In an optional embodiment, an optional implementation of step S4201 may be referred to step S4101 in FIG. 4a and other associated parts of the embodiment related to FIG. 4a, which will not be repeated here.

In some embodiments, the first information is used for the terminal 101 to determine the transmit power of the RACH based on the first value.

In some embodiments, the first information is used for the terminal 101 to determine the transmit power of the RACH based on:

$$P_{RACH} = \min\left\{ P_{CMAX}, P_{traget} + PL + \delta \right\}.$$

Optionally, $P_{RACH}$ represents the transmit power of the RACH, $P_{CMAX}$ represents a maximum transmit power, $P_{traget}$ represents a target receive power of the RACH, $PL$ represents a path loss determined based on a downlink reference signal, and $\delta$ represents the first value.

In some embodiments, the first information is used for the terminal 101 to determine the transmit power of the RACH based on a second value, and the second value is determined based on the first value received within the first time period.

In some embodiments, the first information is used for the terminal 101 to determine the transmit power of the RACH based on:

$$P_{RACH} = \min\left\{ P_{CMAX}, P_{target} + PL + \Delta \right\}.$$

Optionally, $P_{RACH}$ represents the transmit power of the RACH, $P_{CMAX}$ represents a maximum transmit power, $P_{traget}$ represents a target receive power of the RACH, $PL$ represents a path loss determined based on a downlink reference signal, and $\Delta$ represents the second value. In some embodiments, the first information is used to instruct the terminal 101 to determine the transmit power of the RACH based on the retransmission count of the RACH and the power ramping value.

In some embodiments, the first information is used for the terminal 101 to determine the transmit power of the RACH based on:

$$P_{RACH} = \min\left\{P_{CMAX}, P_{traget} + PL\right\}.$$

where $P_{RACH}$ represents the transmit power of the RACH, $P_{CMAX}$ represents a maximum transmit power, $P_{traget} =$ preambleReceivedTargetPower + DELTA_PREAMBLE + (COUNTER - 1) × STEP, preambleReceivedTargetPower represents an initial random access preamble power configured by the network device 102, DELTA_PREAMBLE represents a power offset value determined based on a preamble format, COUNTER represents the retransmission count of the RACH, STEP represents the power ramping value, and PL represents a path loss determined based on a downlink reference signal.

In some embodiments, the first information is used to instruct the terminal 101 to determine the transmit power of the RACH based on the first value, the retransmission count of the RACH and the power ramping value.

In some embodiments, the first information is used for the terminal 101 to determine the transmit power of the RACH based on:

$$P_{RACH} = \min\left\{P_{CMAX}, P_{traget} + PL + \delta\right\}.$$

where $P_{RACH}$ represents the transmit power of the RACH, $P_{CMAX}$ represents a maximum transmit power, $P_{target} =$ preambleReceivedTargetPower + DELTA_PREAMBLE + (COUNTER - 1) × STEP, preambleReceivedTargetPower represents an initial random access preamble power configured by the network device 102, DELTA_PREAMBLE represents a power offset value determined based on a preamble format, COUNTER represents the retransmission count of the RACH, STEP represents the power ramping value, PL represents a path loss determined based on a downlink reference signal, and $\delta$ represents the first value.

In some embodiments, the first information is used to instruct the terminal 101 to determine the transmit power of the RACH based on the second value, the retransmission count of the RACH, and the power ramping value, and the second value is determined based on the first value received within the first time period.

In some embodiments, the first information is used for the terminal 101 to determine the transmit power of the RACH based on:

$$P_{RACH} = \min\left\{P_{CMAX}, P_{traget} + PL + \Delta\right\}.$$

where $P_{RACH}$ represents the transmit power of the RACH, $P_{CMAX}$ represents a maximum transmit power, $P_{traget} =$ preambleReceivedTargetPower + DELTA_PREAMBLE + (COUNTER - 1) × STEP, preambleReceivedTargetPower represents an initial random access preamble power configured by the network device 102, DELTA_PREAMBLE represents a power offset value determined based on a preamble format, DELTA_PREAMBLE represents the retransmission count of the RACH, STEP represents the power ramping value, PL represents a path loss determined based on a downlink reference signal, and $\Delta$ represents the second value.

In some embodiments, the second value satisfies the following relationship:

$$\Delta = \Delta(i - k) + \Sigma_{i-k+1}^{i}\delta_{m}$$

where $\Delta$ represents the second value, i represents a current time, k represents any time before the current time, and $\delta_{m}$ represents the first value received for m-th time.

In some embodiments, in a case where the first information indicates that a beam or an SSB index of the RACH transmitted by the terminal 101 changes, the first information is used for the terminal 101 to determine the second value to be a preset value.

In an optional embodiment, for the optional implementation of step S4201, reference may be made to step S2102 in FIG. 2 and other associated parts in the embodiment related to FIG. 2.

In step S4202, the candidate cell of the network device 102 receives the RACH transmitted by the terminal 101 based on the transmit power of the RACH.

For the optional implementation of step S4202, reference may be made to step S2103 in FIG. 2 and other associated parts in the embodiment related to FIG. 2. In an optional embodiment, an optional implementation of step S4202 may be referred to step S4102 in FIG. 4a and other associated parts of the embodiment related to FIG. 4a, which will not be repeated here.

In some embodiments, the RACH is used to determine the TA of the candidate cell. For its optional implementation, reference may be made to the optional implementation of step S4204 in FIG. 2 and other associated parts in the embodiment related to FIG. 2, which will not be repeated here.

The power control method according to embodiments of the present disclosure may include at least one of steps S4201 to S4202. For example, step 4201 may be implemented as an independent embodiment, step 4202 may be implemented as an independent embodiment, and step S4101+step S4102 may be implemented as an independent embodiment, which is not limited to this.

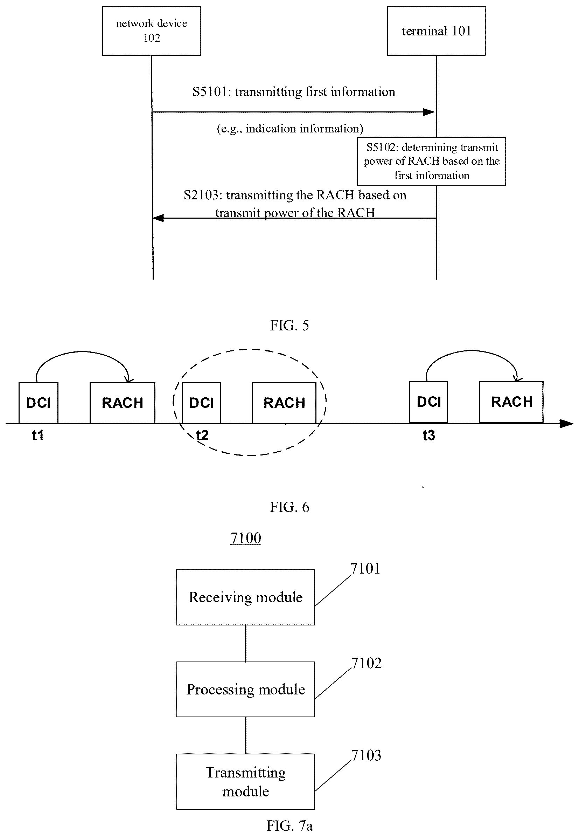

FIG. 5 is a flowchart of a power control method according to an embodiment of the present disclosure. As illustrated in FIG. 5, embodiments of the present disclosure relate to a power control method for a communication system 100, and the above method includes:

Step S5101: the network device 102 transmits first information to the terminal 101.

For the optional implementation of step S5101, reference may be made to the optional implementation of step S2101 in FIG. 2 and other associated parts in the embodiment related to FIG. 2. For the optional implementation of step S5101, reference may be made to the optional implementation of step S4101 in FIG. 4a and other associated parts in the embodiment related to FIG. 4a. For the optional implementation of step S5101, reference may be made to the optional implementation of step S4201 in FIG. 4b and other associated parts in the embodiment related to FIG. 4b.

In some embodiments, the first information is used for the terminal 101 to determine the transmit power of the access channel RACH.

In step S5102, the terminal 101 determines the transmit power of the RACH based on the first information.

For the optional implementation of step S5103, reference may be made to the optional implementation of step S2102 in FIG. 2 and other associated parts in the embodiment related to FIG. 2. For the optional implementation of step S5103, reference may be made to the optional implementation of step S3102 in FIG. 3a and other associated parts in the embodiment related to FIG. 3a. For the optional implementation of step S5103, reference may be made to the optional implementation of step S3202 in FIG. 3b and other associated parts in the embodiment related to FIG. 3b.

In step S5103: the terminal 101 transmits the RACH to the candidate cell of the network device 102 based on the transmit power of the RACH.

For the optional implementation of step S5104, reference may be made to the optional implementation of step S2103 in FIG. 2 and other associated parts in the embodiment related to FIG. 2. For the optional implementation of step S5104, reference may be made to the optional implementation of step S3103 in FIG. 3a and other associated parts in the embodiment related to FIG. 3a. For the optional implementation of step S5104, reference may be made to the optional implementation of step S3203 in FIG. 3b and other associated parts in the embodiment related to FIG. 3b.

In some embodiments, the RACH is used to determine the TA of the candidate cell.

In some embodiments, the above-described method may include the method described in the above-described embodiments related to the communication system 100, the terminal 101, the network device 102, and the like, which will not be repeated here.

Embodiments of the present disclosure also provide a power control method as follows:

Scheme 1: Power control of random access channel (RACH) triggered by a source cell for timing advance (TA) measurement of a candidate cell.

$$P_{RACH} = \min \left\{ P_{CMAX}, P_{traget} + PL + \delta \right\}$$

In some embodiments, for a physical downlink shared channel order-triggered random access channel (PDCCH order RACH) where timing advance (TA) measurement is performed, an adjustment amount $\delta$ as illustrated in the above formula is added in power calculation.

In some embodiments, each time the network device triggers a random access channel (RACH) to perform a timing advance (TA) measurement by a physical downlink shared channel order (PDCCH order) (downlink control information, DCI), the timing advance (TA) measurement for the same candidate cell indicates the value to adjust the transmit power of the random access channel (RACH). (On initial transmission, this value is 0)

In some embodiments, the indication mode is by triggering downlink control information (DCI) indication of a random access channel (RACH), and the correspondence between the indication field and the actual adjustment value is illustrated in Table 2:

Table 2

| indication field | adjustment value |
| --- | --- |
| 0 | -2 |
| 1 | -1 |

(continued)

| indication field | adjustment value |
|---|---|
| 2 | +1 |
| 3 | +2 |

In some embodiments, the adjustment mode includes Option1 and Option2:

Option1: Adjust for the first uplink transmission every time.

Option2: Each adjustment is adjusted for the previous transmission. In this case, the adjustment amount is a cumulative value $\Delta$. That is $\Delta = \Delta(i-k) + \Sigma_{i-k+1}^{i}\delta_m$ , where $\delta_m$ represents $\delta$ indicated by the downlink control information (DCI) at (i-k + m) time. If the beam of the random access channel (RACH) changes, i.e. the synchronization signal block index (SSB index) in the physical downlink shared channel order (PDCCH order) changes, $\Delta(i) = \Delta(0)$ or $\Delta(i) = 0$.

Scheme 2: The candidate cell does not correctly receive the preamble sequence, and performs random access channel (RACH) retransmission and power ramping.

In some embodiments, the source cell re-triggers the random access channel (RACH) through a physical downlink shared channel order (PDCCH order) for timing advance (TA) measurement and power ramping.

In some embodiments, $P_{target}$ is gradually increased by leveraging the power ramping approach.

In some embodiments, when the random access channel (RACH) is triggered by the downlink control information (DCI), it indicates whether the previous preamble reception is successfully received. If the previous preamble reception is not successful, the current transmission of the random access channel (RACH) may be regarded as a retransmission. The user records the retransmission count through a COUNTER. Furthermore, the transmit power is increased in the manner of the above formula. Before the maximum number of transmissions is reached, if the beam is changed, or the network device indicates that the previous preamble is successfully received, the power ramping is not performed.

In some embodiments, for example, as illustrated in FIG. 6, if the preamble is not correctly received at time t1, the network device re-triggers the random access channel (RACH) at time t2 to perform timing advance (TA) measurement. At this time, the terminal 101 determines that this transmission may be regarded as a retransmission according to the indication of the network device, and will performs power ramping. When the preamble at time t2 is successfully received, the next time the RACH for measurement timing advance (TA) is triggered again, such as at time t3, the network device indicates that the triggered random access channel (RACH) is not a retransmission of the random access channel (RACH) at time t2.

Embodiments of the present disclosure also provide a power control method as follows:

A power control mode for random access procedure for timing advance (TA) measurement of the candidate cell. The terminal 101 receives indication information of the network device, and the indication information is used to trigger the terminal 101 to initiate a random access to the candidate cell to measure the timing advance (TA)

In some embodiments, the indication information includes first indication information, and the first indication information indicates a power adjustment value $\delta$ for the user.

Specifically, the value of the indication field and the adjustment value $\delta$ correspond to each other as illustrated in Table 3 below.

Table 3

| indication field | adjustment value |
|---|---|
| 0 | -2 |
| 1 | -1 |
| 2 | +1 |
| 3 | +2 |

In some embodiments, the terminal 101 determines the transmit power of the preamble according to the following formula:

$$P_{RACH} = \min\left\{P_{CMAX}, P_{\mathrm{target}} + PL + \Delta\right\}$$

Option1: $\Delta = \delta$, that is, adjust for the first uplink transmission every time.

Option2: $\Delta = \Delta\left(i - k\right) + \Sigma_{i-k+1}^{i}\,\delta_{\mathrm{m}}$, where i is the current moment, and the summation is for all $\delta$ received between moment (i-k+1) and moment i. Each adjustment is adjusted for the previous transmission. In this case, the adjustment amount $\Delta$ is a cumulative value. If the beam of the random access channel (RACH) initiated to a certain candidate cell changes, that is, the synchronization signal block index (SSB index) in the physical downlink shared channel order (PDCCH order) changes, $\Delta$ is set to zero, that is, $\Delta = 0$ at this moment.

In some embodiments, the indication information includes second indication information.

In some embodiments, the second indication information is used to indicate for the terminal 101 whether the currently triggered random access channel (RACH) is a one time retransmission.

In some embodiments, a counter is newly introduced for the terminal 101 to record the nth retransmission of the triggered random access channel (RACH), with an initial value of 1. The counter is incremented by 1 in response to an indication that the random access channel (RACH) currently triggered by the terminal 101 is a one time retransmission.

In some embodiments, a retransmission of a random access channel (RACH) is initiated, and the terminal 101 determines the transmit power of the current terminal 101 as follows:

$$P_{RACH} = \min\left\{P_{CMAX}, P_{traget} + PL\right\}$$

where, $P_{traget}$ = *preambleReceivedTargetPower* + *DELTA_PREAMBLE* + (*COUNTER* - 1) × *STEP*. *COUNTER* is a counter, and STEP is the power value of each ramping, which may reuse an existing value or may be reconfigured.

In some embodiments, a retransmission of a random access channel (RACH) is initiated to determine the transmit power of the current terminal 101 as follows:

$$P_{RACH} = min\{P_{CMAX}, P_{traget} + PL + \Delta\}.$$

where, $\Delta = \delta$ or $\Delta = \Delta\left(i - k\right) + \Sigma_{i-k+1}^{i}\delta_{\mathrm{m}}$.

Optionally, $P_{traget}$ = *preambleReceivedTargetPower* + *DELTA_PREAMBLE* + (*COUNTER* - 1) × *STEP*.

In some embodiments, the counter is reset to 1 in response to the second indication information indicating that the random access channel (RACH) currently triggered by the terminal 101 is not a retransmission, or the indication information indicates that a beam of random access initiated by the terminal 101 changes, that is, a synchronization signal block index (SSB index) changes.

In some embodiments, the sending power and the transmission power correspond to the transmit power in the foregoing embodiments.

In embodiments of the present disclosure, each step may be implemented as an independent embodiment. Some or all of the steps, optional implementations thereof, may be arbitrarily combined with some or all of the steps in other embodiments, and may be arbitrarily combined with optional implementations of other embodiments.

Embodiments of the present disclosure also provide an apparatus for implementing any of the above methods, for example, an apparatus including a unit or a module for implementing steps performed by a terminal in any of the above methods is provided. For another example, another apparatus is provided, including a unit or module for implementing the steps performed by a network device (e.g., an access network device, a core network function node, a core network device, etc.) in any of the above methods.

It should be understood that the division of various units or modules in the above apparatus is only a division of logical functions, and may be fully or partially integrated into one physical entity or may be physically separated when actually implemented. Furthermore, units or modules in the apparatus may be implemented in the form of a processor calling software: for example, the apparatus includes a processor, the processor is connected to a memory, the memory has instructions stored therein, and the processor calls the instructions stored in the memory to implement any of the above methods or to implement the functions of each unit or module of the apparatus, in which the processor is, for example, a general purpose processor, such as a central processing unit (CPU) or a microprocessor, and the memory is a memory within the apparatus or a memory outside the apparatus. Alternatively, the units or modules in the apparatus may be implemented in the form of hardware circuit, and some or all of the functions of the units or modules may be implemented by designing the hardware circuit, and the above hardware circuit may be understood as one or more processors; for example, in an implementation, the hardware circuit is an application-specific integrated circuit (ASIC), and the functions of some or all of the above units or modules are realized by designing the logical relationship of elements in the circuit; for another example, in another implementation, the hardware circuit may be implemented by a programmable logic device (PLD). Taking a field programmable gate array (FPGA) as an example, the hardware circuit can include a large number of logic gate circuits, and the connection relationship between the logic gate circuits is configured by a configuration file, realizing the functions of some or all of the above units or modules. All units or modules of the above apparatus may be implemented entirely in the form of the processor calling software, or entirely in the form of hardware circuit, or partially in the form of the processor calling software, and the rest in the form of hardware circuit.

In embodiments of the present disclosure, the processor is a circuit having signal processing capabilities, and in an implementation, the processor may be a circuit having instruction reading and running capabilities, such as a central processing unit (CPU), a microprocessor, a graphics processing unit (GPU) (which may be understood as a microprocessor), or a digital signal processor (DSP), etc.; in another implementation, the processor may implement certain functions through the logical relationship of hardware circuits that are fixed or reconfigurable, for example, the processor is a hardware circuit implemented by an application-specific integrated circuit (ASIC) or a programmable logic device (PLD), such as an FPGA. In the reconfigurable hardware circuit, the process in which the processor loads a configuration document to implement the configuration of the hardware circuit may be understood as the process in which the processor loads instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), and the like.

FIG. 7a is a schematic structural diagram of a first power control apparatus according to an embodiment of the present disclosure. As illustrated in FIG. 7a, the first power control apparatus 7100 includes: a receiving module 7101 configured to receive first information transmitted by the network device, in which the first information is used to trigger a terminal to transmit a random access channel (RACH) to a candidate cell of the network device, and the first information is used for the terminal to determine a transmit power of the RACH; and a processing module 7102 configured to determine the transmit power of the RACH based on the first information; and a transmitting module 7103 configured to transmit the RACH to the candidate cell of the network device based on the transmit power of the RACH, in which the RACH is used to determine a TA of the candidate cell. Optionally, the receiving module is configured to perform the reception-related steps performed by the terminal 101 in any of the above methods, the processing module is configured to perform the processing-related steps performed by the terminal 101 in any of the above methods, and the transmitting module is configured to perform the transmission-related steps performed by the terminal 101 in any of the above methods, which will not be repeated here.

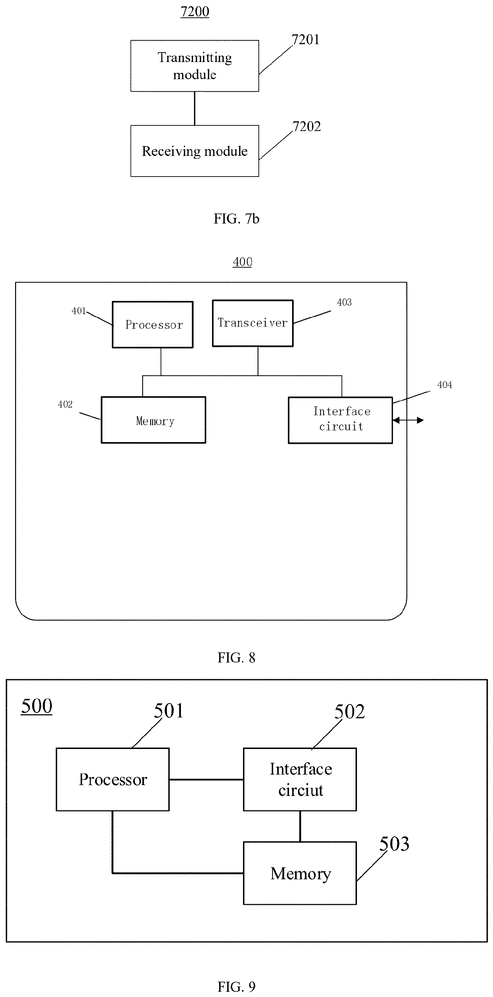

FIG. 7b is a schematic structural diagram of a second power control apparatus according to an embodiment of the present disclosure. As illustrated in FIG. 7b, the second power control apparatus 7200 includes: a transmitting module 7201 configured to transmit first information, in which the first information is used to trigger a terminal to transmit a random access channel to a candidate cell of a network device, and the first information is used for the terminal 101 to determine a transmit power of the RACH; and a receiving module 7202 configured to receive, by the candidate cell of the network device, the RACH transmitted by the terminal 101 based on the transmit power of the RACH, and the RACH is used to determine the TA of the candidate cell. Optionally, the transmitting module is configured to perform the steps related to transmission performed by the network device 102 in any of the above methods, and the receiving module is configured to perform the steps related to reception performed by the network device 102 in any of the above methods, which is not repeated here. Optionally, the second power control apparatus 7200 further includes a processing module, and the processing module is configured to perform the processing-related steps performed by the network device 102 in any of the above methods, which is not repeated here.

FIG. 8a is a schematic structural diagram of a communication device 8100 according to an embodiment of the present disclosure. The communication device 8100 may be a network device (e.g., a access network device, a core network device), a terminal (e.g., a user equipment), a chip, a chip system, or a processor, etc. that supports the network device to realize the above-described method, or a chip, a chip system, or a processor, etc. that supports the terminal device to realize the above-described method. The communication device 8100 may be used to implement the methods described in the method embodiments described above, details of which may be found in the description of the method embodiments described above.

As illustrated in FIG. 8a, the communication device 8100 includes one or more processors 8101. The processor 8101 may be a general-purpose processor, a dedicated processor, or the like, and may be, for example, a baseband processor or a central processing unit. The baseband processor may be used to process the communication protocol as well as the communication data, and the central processor may be used to control the communication device (e.g., the base station, the baseband chip, the terminal device, the terminal device chip, the DU or the CU, etc.), execute the program, and process the data of the program. The processor 8101 is to invoke instructions to cause the communication device 8100 to perform any of the above methods.

In some embodiments, the communication device 8100 further includes one or more memories 8102 for storing instructions. Optionally, all or part of the memory 8102 may also be outside the communication device 8100.

In some embodiments, the communication device 8100 further includes one or more transceivers 8103. When the communication device 8100 includes one or more transceivers 8103, communication steps such as transmission and reception in the above method are performed by the transceiver 8103, and other steps are performed by the processor 8101.

In some embodiments, the transceiver may include a receiver and a transmitter, which may be separate or integrated together. Optionally, terms such as a transceiver, a transceiver unit, a transceiving machine, and a transceiver circuit may be mutually replaced, terms such as a transmitter, a transmitter unit, a transceiving machine, and a transmitter circuit may be mutually replaced, and terms such as a receiver, a receiving unit, a receiving machine, and a receiving circuit may be mutually replaced.

Optionally, the communication device 8100 further includes one or more interface circuits 8104 connected to the memory 8102, and the interface circuits 8104 may be used to receive signals from the memory 8102 or other devices, and may be used to transmit signals to the memory 8102 or other devices. For example, the interface circuit 8104 may read instructions stored in the memory 8102 and transmit the instructions to the processor 8101.

The communication device 8100 in the above description of embodiments may be a network device or a terminal device, but the scope of the communication device 8100 described in the present disclosure is not limited to this, and the structure of the communication device 8100 may not be limited by FIG. 8a. The communication device may be a stand-alone device or may be part of a larger device. For example, the communication device may be: 1) a stand-alone integrated circuit IC, or a chip, or a chip system or subsystem; (2) a set having one or more ICs, optionally, the set of ICs may also include storage components for storing data, programs; (3) an ASIC, such as a Modem; (4) modules that may be embedded in other devices; (5) receivers, terminal devices, intelligent terminal devices, cellular phones, wireless devices, handsets, mobile units, vehicle devices, network devices, cloud devices, artificial intelligence devices, etc.; (6) Others, etc.

FIG. 8b is a schematic structural diagram of a chip 8200 provided by an embodiment of the present disclosure. In a case where the communication device 8100 may be a chip or a chip system, reference may be made to the schematic structural diagram of the chip 8200 illustrated in FIG. 8b, which is not limited to this.

The chip 8200 includes one or more processors 8201 for invoking instructions to cause the chip 8200 to perform any of the above methods.

In some embodiments, the chip 8200 further includes one or more interface circuits 8202 connected to the memory 8203, the interface circuit 8202 may be used to receive signals from the memory 8203 or other devices, and the interface circuit 8202 may be used to transmit signals to the memory 8203 or other devices. For example, the interface circuit 8202 may read instructions stored in the memory 8203 and transmit the instructions to the processor 8201. Optionally, terms such as interface circuit, interface, transceiver pin, transceiver, and the like may be replaced with each other.

In some embodiments, the chip 8200 further includes one or more memories 8203 for storing instructions. Optionally, all or part of the memory 8203 may be outside the chip 8200.

The present disclosure also provides a storage medium having instructions stored thereon that, when the instructions are executed on the communication device 8100, cause the communication device 8100 to perform any of the above methods. Optionally, the storage medium is an electronic storage medium. Optionally, the storage medium is a computer-readable storage medium, but is not limited to this, and may be a storage medium readable by another device. Optionally, the storage medium may be a non-transitory storage medium, but is not limited to this, and may be a transitory storage medium.

The present disclosure also provides a program product that, when executed by the communication device 8100, causes the communication device 8100 to perform any of the above methods. Optionally, the program product is a computer program product.

The present disclosure also provides a computer program that, when run on a computer, causes the computer to perform any of the above methods.

**Claims**

1. A power control method, performed by a terminal, comprising:

   receiving first information transmitted by a network device, wherein the first information is used to trigger the terminal to transmit a random access channel (RACH) to a candidate cell of the network device, and the first information is used for the terminal to determine a transmit power of the RACH;
   determining the transmit power of the RACH based on the first information; and
   transmitting the RACH to the candidate cell of the network device based on the transmit power of the RACH, wherein the RACH is used to determine a timing advance (TA) of the terminal to the candidate cell.

2. The method according to claim 1, wherein the first information indicates a first value of the RACH, and the first value indicates a transmit power adjustment amount of the RACH.

3. The method according to claim 2, wherein the first information comprises a first field, and different values of the first field correspond to different first values.

4. The method according to claim 2 or 3, wherein determining the transmit power of the RACH based on the first information comprises:
determining the transmit power of the RACH based on the first value.

5. The method according to claim 4, wherein determining the transmit power of the RACH based on the first value satisfies:

$$P_{RACH} = \min\left\{P_{CMAX}, P_{traget} + PL + \delta\right\}$$

where $P_{RACH}$ represents the transmit power of the RACH, $P_{CMAX}$ represents a maximum transmit power, $P_{traget}$ represents a target receive power of the RACH, $PL$ represents a path loss determined based on a downlink reference signal, and $\delta$ represents the first value.

6. The method according to claim 2 or 3, wherein determining the transmit power of the RACH based on the first information comprises:
determining the transmit power based on a second value, wherein the second value is determined based on the first value received within a first time period.

7. The method according to claim 6, wherein determining the transmit power based on the second value satisfies:

$$P_{RACH} = \min\left\{P_{CMAX}, P_{target} + PL + \Delta\right\}$$

where $P_{RACH}$ represents the transmit power of the RACH, $P_{CMAX}$ represents a maximum transmit power, $P_{target}$ represents a target receive power of the RACH, $PL$ represents a path loss determined based on a downlink reference signal, and $\Delta$ represents the second value.

8. The method according to claim 2, wherein the first information indicates whether the RACH currently transmitted by the terminal to the candidate cell is a retransmitted RACH.

9. The method according to claim 8, wherein in a case where the first information indicates that the RACH currently transmitted by the terminal to the candidate cell is a retransmitted RACH, a retransmission count of the RACH is determined.

10. The method according to claim 9, wherein determining the retransmission count of the RACH comprises:

incrementing a value corresponding to a counter of the candidate cell by one, and determining the retransmission count of the RACH currently transmitted by the terminal to the candidate cell based on the value corresponding to the counter of the candidate cell,
wherein different candidate cells correspond to different counters.

11. The method according to claim 8, wherein in a case where the first information indicates that the RACH currently transmitted by the terminal to the candidate cell is not a retransmitted RACH, or a beam of the RACH transmitted by the terminal to the candidate cell changes, or an SSB index of the RACH transmitted by the terminal to the candidate changes, a counter of the candidate cell is reset to 1.

12. The method according to any one of claims 9 to 11, wherein determining the transmit power of the RACH based on the first information comprises:
determining the transmit power of the RACH based on the retransmission count of the RACH and a power ramping value.

13. The method according to claim 12, wherein determining the transmit power of the RACH based on the retransmission count of the RACH and the power ramping value satisfies:

$$P_{RACH} = \min\left\{P_{CMAX}, P_{traget} + PL\right\}$$

where $P_{RACH}$ represents the transmit power of the RACH, $P_{CMAX}$ represents a maximum transmit power, $P_{traget}$ = *preambleReceivedTargetPower + DELTA_PREAMBLE + (COUNTER - 1) × STEP, preambleReceivedTargetPower* represents an initial random access preamble power configured by the network device, *DELTA_PREAMBLE* represents a power offset value determined based on a preamble format, *COUNTER* represents the retransmission count of the RACH, *STEP* represents the power ramping value, and *PL* represents a path loss determined based on a downlink reference signal.

14. The method according to claim 2, wherein the first information indicates the first value of the RACH, and the first information indicates whether the RACH currently transmitted by the terminal to the candidate cell is a retransmitted RACH.

15. The method according to claim 14, wherein determining the transmit power of the RACH based on the first information comprises:
determining the transmit power of the RACH based on the first value, the retransmission count of the RACH and a power ramping value.

16. The method according to claim 15, wherein determining the transmit power of the RACH based on the first value, the retransmission count of the RACH and the power ramping value satisfies:

$$P_{RACH} = \min\left\{P_{CMAX}, P_{traget} + PL + \delta\right\}$$

where $P_{RACH}$ represents the transmit power of the RACH, $P_{CMAX}$ represents a maximum transmit power, $P_{traget}$ = *preambleReceivedTargetPower + DELTA_PREAMBLE + (COUNTER - 1) × STEP, preambleReceivedTargetPower* represents an initial random access preamble power configured by the network device, *DELTA_PREAMBLE* represents a power offset value determined based on a preamble format, *COUNTER* represents the retransmission count of the RACH, *STEP* represents the power ramping value, *PL* represents a path loss determined based on a downlink reference signal, and $\delta$ represents the first value.

17. The method according to claim 14, wherein determining the transmit power of the RACH based on the first information comprises:
determining the transmit power of the RACH based on a second value, the retransmission count of the RACH, and a power ramping value, wherein the second value is determined based on the first value received within a first time period.

18. The method according to claim 17, wherein determining the transmit power of the RACH based on the second value, the retransmission count of the RACH and the power ramping value satisfies:

$$P_{RACH} = \min\left\{P_{CMAX}, P_{traget} + PL + \Delta\right\}$$

where $P_{RACH}$ represents the transmit power of the RACH, $P_{CMAX}$ represents a maximum transmit power, $P_{traget}$ = *preambleReceivedTargetPower + DELTA_PREAMBLE + (COUNTER - 1) × STEP, preambleReceivedTargetPower* represents an initial random access preamble power configured by the network device, *DELTA_PREAMBLE* represents a power offset value determined based on a preamble format, *COUNTER* represents the retransmission count of the RACH, *STEP* represents the power ramping value, *PL* represents a path loss determined based on a downlink reference signal, and $\Delta$ represents the second value.

19. The method according to claim 7 or 18, wherein the second value satisfies:

$$\Delta = \Delta\left(i - k\right) + \Sigma_{i-k+1}^{i}\delta_{m}$$

where $\Delta$ represents the second value, i represents a current time, k represents any time before the current time, and $\delta_{m}$ represents the first value received for m-th time.

20. The method according to claim 5 or 16, wherein in a case where the first information indicates that a beam or an SSB index of the RACH transmitted by the terminal changes, the first value is determined to be a preset value.

21. The method according to claim 7 or 18, wherein in a case where the first information indicates that a beam or an SSB index of the RACH transmitted by the terminal changes, the second value is determined to be a preset value.

22. A power control method, performed by a network device, comprising:

transmitting first information, wherein the first information is used to trigger a terminal to transmit a random access channel (RACH) to a candidate cell of the network device, and the first information is used for the terminal to determine a transmit power of the RACH; and
receiving, by the candidate cell of the network device, the RACH transmitted by the terminal based on the transmit power of the RACH, wherein the RACH is used to determine a timing advance (TA) of the terminal to the candidate cell.

23. The method according to claim 22, wherein the first information indicates a first value of the RACH, and the first value indicates a transmit power adjustment amount of the RACH.

24. The method according to claim 23, wherein the first information comprises a first field, and different values of the first field correspond to different first values.

25. The method according to claim 22, wherein the first information indicates whether the RACH currently transmitted by the terminal to the candidate cell is a one time retransmitted RACH.

26. The method according to claim 25, wherein in a case where the RACH previously transmitted by the terminal for measuring TA is not received, the first information indicates that the RACH currently transmitted by the terminal to the candidate cell is a one time retransmission.

27. The method according to claim 25, wherein in a case where the RACH previously transmitted by the terminal for measuring TA is successfully received, the first information indicates that the RACH currently transmitted by the terminal to the candidate cell is not a retransmission.

28. The method according to claim 26, wherein the first information indicates that the RACH currently transmitted by the terminal to the candidate cell is a retransmitted RACH, and the first information is used for the terminal to determine a retransmission count of the RACH.

29. The method according to claim 27, wherein the first information indicates that the RACH currently transmitted by the terminal to the candidate cell is not a retransmitted RACH, or a beam of the RACH transmitted by the terminal to the candidate cell changes, or an SSB index of the terminal transmitting the RACH to the candidate changes, and the first information is used for the terminal to determine to reset the counter of the candidate cell to 1.

30. The method according to claim 22, wherein the first information indicates a first value of the RACH, and the first information indicates whether the RACH currently transmitted by the terminal to the candidate cell is a retransmitted RACH.

31. A power control method, performed by a communication system, comprising:

transmitting, by a network device, first information, wherein the first information is used to trigger a terminal to transmit a random access channel (RACH) to a candidate cell of the network device, and the first information is used for the terminal to determine a transmit power of the RACH;
receiving, by the terminal, the first information transmitted by the network device;
determining, by the terminal, a transmit power of the RACH based on the first information;

transmitting, by the terminal, the RACH to the candidate cell of the network device based on the transmit power of the RACH, wherein the RACH is used to determine a timing advance (TA) of the terminal to the candidate cell; and receiving, by the candidate cell of the network device, the RACH transmitted by the terminal based on the transmit power of the RACH.

32. A first power control apparatus, comprising:

a receiving module configured to receive first information transmitted by a network device, wherein the first information is used to trigger a terminal to transmit a random access channel (RACH) to a candidate cell of the network device, and the first information is used for the terminal to determine a transmit power of the RACH; a processing module configured to determine the transmit power of the RACH based on the first information; and a transmitting module configured to transmit the RACH to the candidate cell of the network device based on the transmit power of the RACH, wherein the RACH is used to determine a timing advance (TA) of the terminal to the candidate cell.

33. A second power control apparatus, comprising:

a transmitting module configured to transmit first information, wherein the first information is used to trigger a terminal to transmit a random access channel (RACH) to a candidate cell of a network device, and the first information is used for the terminal to determine a transmit power of the RACH; and a receiving module configured to receive the RACH transmitted by the terminal based on the transmit power of the RACH, wherein the RACH is used to determine a timing advance (TA) of the terminal to the candidate cell.

34. A communication device, comprising:

one or more processors, wherein the processor is configured to invoke instructions to cause the communication device to perform the power control method according to any one of claims 1 to 21 or 22 to 30.

35. A communication system comprising a terminal and a network device, wherein the terminal is configured to implement the power control method according to any one of claims 1 to 21, and the network device is configured to implement the power control method according to any one of claims 22 to 30.

36. A storage medium storing instructions that, when executed by a communication device, cause the communication device to perform the power control method according to any one of claims 1 to 21 or 22 to 30.

communication
system 100

| terminal 101 | network device 102 |

FIG. 1a

■ terminal

● network
device

Cell 2

Cell 3

Cell 1

Cell 4

FIG. 1b

| network device 102 | | terminal 101 |
|---|---|---|

S2101: transmitting first information

(e.g., indication information)

S2102: determining transmit power of RACH based on first information

S2103: transmitting RACH

S2104: determining TA

FIG. 2

S3101: obtaining first information (e.g., indication information)

↓

S3102: determining transmit power of RACH

↓

S3103: transmitting RACH

FIG. 3a

S3201: receiving first information transmitted by a network device 102

S3202: determining transmit power of RACH based on the first information

S3203: transmitting RACH to a candidate cell of the network device 102 based on the transmit power of the RACH

FIG. 3b

S4101: transmitting first information

S4102: obtaining RACH

S4103: determining TA

FIG. 4a

S4201: transmitting first information

S4202: receiving, by a candidate cell of the network device 102, RACH transmitted by a terminal 101 based on a transmit power of RACH

FIG. 4b

network device
102

terminal 101

S5101: transmitting first information

(e.g., indication information)

S5102: determining transmit
power of RACH based on the
first information

S2103: transmitting the RACH based on
transmit power of the RACH

FIG. 5

DCI    RACH    DCI    RACH    DCI    RACH

t1    t2    t3

FIG. 6

7100

Receiving module    7101

Processing module    7102

Transmitting
module    7103

FIG. 7a

7200

FIG. 7b

400

FIG. 8

500

FIG. 9

## INTERNATIONAL SEARCH REPORT

| | International application No. |
|---|---|
| | **PCT/CN2023/085810** |

| A. | CLASSIFICATION OF SUBJECT MATTER |
|---|---|

H04W 52/34(2009.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, EPTXT, USTXT, WOTXT, CNKI, 3GPP: 定时提前, 功率, 候选, 小区, 计算, 确定, 随机接入, RACH, TA, power, candidate, cell, determine

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114600547 A (IDAC HOLDINGS, INC.) 07 June 2022 (2022-06-07) description, paragraphs [0017]-[0217] | 1-36 |
| X | CN 101998607 A (CHINA MOBILE COMMUNICATIONS CORP.) 30 March 2011 (2011-03-30) description, paragraphs [0052]-[0077] | 1-36 |
| A | CN 115022949 A (HUAWEI TECHNOLOGIES CO., LTD.) 06 September 2022 (2022-09-06) entire document | 1-36 |
| A | US 2022038976 A1 (SAMSUNG ELECTRONICS CO., LTD.) 03 February 2022 (2022-02-03) entire document | 1-36 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 December 2023** | **21 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/085810** |

| Patent document cited in search report | | | Publication date (day/month/year) | Patent family member(s) | | | Publication date (day/month/year) |
| --- | --- | --- | --- | --- | --- | --- | --- |
| CN | 114600547 | A | 07 June 2022 | EP | 4039047 | A1 | 10 August 2022 |
| | | | | WO | 2021067784 | A1 | 08 April 2021 |
| | | | | US | 2023254899 | A1 | 10 August 2023 |
| CN | 101998607 | A | 30 March 2011 | RU | 2012108647 | A | 20 September 2013 |
| | | | | RU | 2627095 | C2 | 03 August 2017 |
| | | | | WO | 2011023057 | A1 | 03 March 2011 |
| | | | | JP | 2013503582 | A | 31 January 2013 |
| | | | | JP | 5564114 | B2 | 30 July 2014 |
| | | | | US | 2012188897 | A1 | 26 July 2012 |
| | | | | US | 8811319 | B2 | 19 August 2014 |
| | | | | KR | 20120062860 | A | 14 June 2012 |
| | | | | KR | 101385495 | B1 | 29 April 2014 |
| | | | | EP | 2475205 | A1 | 11 July 2012 |
| | | | | EP | 2475205 | A4 | 21 January 2015 |
| | | | | EP | 2475205 | B1 | 16 March 2016 |
| CN | 115022949 | A | 06 September 2022 | WO | 2020164621 | A1 | 20 August 2020 |
| US | 2022038976 | A1 | 03 February 2022 | KR | 20200073626 | A | 24 June 2020 |
| | | | | WO | 2020122509 | A1 | 18 June 2020 |

Form PCT/ISA/210 (patent family annex) (July 2022)